(19) Europäisches Patentamt
European Patent Office
Office européen des brevets

(11) **EP 4 528 602 B1**

(12) **EUROPEAN PATENT SPECIFICATION**


(45) Date of publication and mention of the grant of the patent:
**19.08.2026 Bulletin 2026/34**

(21) Application number: **23198805.6**

(22) Date of filing: **21.09.2023**

(51) International Patent Classification (IPC):
***G06N 10/60*** *(2022.01)*

(52) Cooperative Patent Classification (CPC):
**G06N 10/60**


(54) **A METHOD AND SYSTEM FOR BLACK-BOX OPTIMIZATION USING QUANTUM COMPUTATION**

VERFAHREN UND SYSTEM ZUR BLACKBOX-OPTIMIERUNG MITTELS QUANTENBERECHNUNG

PROCÉDÉ ET SYSTÈME D'OPTIMISATION DE BOÎTE NOIRE À L'AIDE D'UN CALCUL QUANTIQUE


(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(43) Date of publication of application:
**26.03.2025 Bulletin 2025/13**



(73) Proprietor: **Terra Quantum AG**
**9000 St. Gallen (CH)**

(72) Inventors:
- **VISHWANATHAN, Akshay**
  **9000 St. Gallen (CH)**
- **MELNIKOV, Artem**
  **9000 St. Gallen (CH)**
- **TERMANOVA, Alena**
  **9000 St. Gallen (CH)**
- **PERELSHTEIN, Michael**
  **9000 St. Gallen (CH)**

(74) Representative: **Lucke, Andreas**
**Boehmert & Boehmert**
**Anwaltspartnerschaft mbB**
**Pettenkoferstrasse 22**
**80336 München (DE)**


(56) References cited:


- **MELNIKOV AR A ET AL: "Quantum state preparation using tensor networks", QUANTUM SCIENCE AND TECHNOLOGY, vol. 8, no. 3, 1 July 2023 (2023-07-01), pages 035027, XP093120444, ISSN: 2058-9565, Retrieved from the Internet <URL:https://iopscience.iop.org/article/10.1088/2058-9565/acd9e7/pdf> DOI: 10.1088/2058-9565/acd9e7**
- **OSELEDETS IVAN ET AL: "TT-cross approximation for multidimensional arrays", LINEAR ALGEBRA AND ITS APPLICATIONS, vol. 432, no. 1, 1 January 2010 (2010-01-01), pages 70 - 88, XP028831990, ISSN: 0024-3795, DOI: 10.1016/J.LAA.2009.07.024**
- **NOAM JANCO ET AL: "Unrolled algorithms for group synchronization", ARXIV.ORG, CORNELL UNIVERSITY LIBRARY, 201 OLIN LIBRARY CORNELL UNIVERSITY ITHACA, NY 14853, 8 December 2022 (2022-12-08), XP091389329**
- **MARKUS HAURU ET AL: "Riemannian optimization of isometric tensor networks", ARXIV.ORG, CORNELL UNIVERSITY LIBRARY, 201 OLIN LIBRARY CORNELL UNIVERSITY ITHACA, NY 14853, 28 August 2020 (2020-08-28), XP081750317**
- **SHI-JU RAN ET AL: "Lecture Notes of Tensor Network Contractions", ARXIV.ORG, CORNELL UNIVERSITY LIBRARY, 201 OLIN LIBRARY CORNELL UNIVERSITY ITHACA, NY 14853, 30 August 2017 (2017-08-30), XP081449936**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF THE INVENTION

The present invention is in the field of encoding of computational operations into quantum circuits. More precisely, the present invention relates to a computer implemented optimization of an intended computational operation for encoding in a quantum circuit.

BACKGROUND

Quantum computers provide a platform of controllable quantum mechanical systems whose state and interaction can be controlled in order to perform a computation. The computation is realized by a deterministic evolution of the controllable quantum mechanical systems, e.g. qubits as quantum analogues of classical bits, and the state of the quantum mechanical systems can be measured to determine the outcome of the computation.

Control operations on these qubits are termed Quantum gates. Quantum gates can coherently act on qubits for inducing changes of the state of a single qubit (so called single-qubit gates) and for acting on multiple qubits (so called multi-qubit gates), e.g. to entangle the states of the multiple qubits, and any combination thereof. For example, a single-qubit gate may induce a rotation of the spin state of an electron by a selectable value, e.g. $\pi/2$. A multi-qubit gate may coherently act on two or more qubits, such as a coherent CNOT operation on the state of two qubits. A plurality of quantum gates can be applied to the qubits of the quantum computer in parallel or in sequence for performing a computation. Finally, the state of the qubits may be measured repeatedly after applying a sequence of quantum gates to determine the probabilities for each possible outcome of the computation.

In essence, the operation of a quantum computer may be considered to rely on the encoding of a starting state into the internal quantum state of the qubits, followed by a multiplication of the internal quantum state of the qubits with a matrix, which can be implemented by a combination of different quantum gates, and a measurement of the resulting outcome.

In order to compute solutions to problems which are considered intractable on classical computers, a quantum computer can leverage the special properties of quantum mechanical states, in particular the superposition and entanglement of different quantum states, to find solutions with a comparatively low number of calculation steps. Moreover, since the quantum operations can create complex superposition states of the qubits, a quantum computer in principle has access to a large internal memory for processing computational states.

However, as found by Shende et al. ("Minimal universal two-qubit controlled-not-based circuits"; Phys. Rev. A, 69:062321, Jun 2004*)* translating an arbitrary operation into a combination of single- and two-qubit gates generally requires an exponential number of operations with respect to the number of qubits.

Lubasch et al ("Variational quantum algorithms for nonlinear problems*")* teach solving nonlinear differential equations by variational quantum computing. The outputs of quantum variational circuits are combined by a quantum nonlinear processing unit, and a comparison is made to an MPS ansatz, in which a Hamiltonian representable as an MPS is encoded as a quantum circuit according to an MPS quantum circuit encoding scheme.

Melnikov et Al. ("Quantum state preparation using tensor networks*")* discloses a vector state encoding technique for encoding the vector into a quantum state relying on MPS representations of the vector.

Oseledets et Al. ("TT-cross approximation for multidimensional arrays*")* discloses a TT-cross (tensor-train-cross) approximation method, which efficiently interpolates and approximates high-dimensional tensors using only a small subset of their entries.

Janco etAl. ("Unrolled algorithms for group synchronization*")* discloses unrolled algorithms for group synchronization problems-such as estimating group elements from noisy pairwise measurements-by leveraging neural network-inspired algorithm unrolling.

SUMMARY OF THE INVENTION

However, current approaches are still limited by the significant complexity involved in implementing the respective steps of encoding states into qubits, encoding matrices through quantum gates, and measurement. Specifically, the exponential complexity of decomposing arbitrary multi-qubit gates with respect to the number of qubits, combined with the need for full connectivity between qubits, presents a significant obstacle. Although algorithms exist, which translate a large matrix into a combination of single quantum gates and two-qubit operations (e.g. CNOT gates), the complexity of the resulting circuit generally scales exponentially with the number of qubits. Using Hamiltonians representable as an MPS constrains the applicable problem instances for the algorithm.

In particular, using arbitrary tensor network representations, it is not straightforward to generate higher powers of an intended operation. However, access to higher powers of a computational operation could be exploited in some

computational schemes, such as the power method for determining the highest eigenvalue of a matrix. If the matrix encodes an approximation of a black box function, the eigenvalue can indicate a maximum of the black box function, thereby allowing the solving of a large class of optimization process using quantum processing resources.

In view of this state-of-the-art, the object of the invention is to provide a computer-implemented method for determining a quantum encoding of an approximation of a function in the form of an encoded matrix and arbitrary powers thereof and a corresponding system, wherein the quantum encoding can closely approximate the black box function and arbitrary powers thereof, but can also be implemented on quantum hardware without the depth of the quantum circuit scaling exponentially with the number of qubits.

This object is solved by a method and a system according to the independent claims. The dependent claims relate to preferred embodiments.

According to a first aspect, the invention relates to a computer-implemented method for determining a quantum encoding of an arbitrary power of an approximation of a function to be implemented on quantum hardware. The method comprises the steps of obtaining an approximation of the function in the form of an approximated matrix product operator, MPO, representation of the function, and selecting an approximation rank based on the approximated MPO representation. The method further comprises determining a rank-based orthogonal approximation of the approximated MPO representation in the form of an orthogonal MPO with isometric sub-tensors of the approximation rank. The method further comprises encoding the orthogonal approximation into a quantum circuit based on encodings of the isometric sub-tensors into quantum gates acting on computation qubits and an initialized set of ancilla qubits, and encoding an arbitrary power of the orthogonal approximation based on applying the quantum circuit multiple times in a concatenated sequence of quantum circuits to an input quantum state.

The function may be a black box function and may be provided in terms of a set of inputs and correlated outputs or may be based on a discretization of a smooth function. The function may generally be mapped to a matrix, e.g. based on a diagonal matrix in which each entry corresponds to the function value at the input associated with the corresponding computational basis state. In some examples, the function is provided as a matrix or a representation thereof.

Moreover, given a set of function values for corresponding input values, a plurality of algorithms exist for generating an approximated representation implementing the function, such as TT-cross approximation, which may generate a tensor network approximation typically in the format of an MPS or MPO .

In preferred embodiments, the approximated MPO representation is an approximate tensor network representation of the function, wherein the method in particular comprises obtaining a series of sub-tensors via a cross approximation of the function.

The tensor network approximation may interpolate and/or approximate the function based on a set of pairs of input and corresponding outputs of the function, such as by sampling the function at randomly selected set of inputs. For example, TT-cross approximation may be used to obtain a tensor train (TT) approximation of the function. Such tensor network representations may be stored efficiently in memory despite an in principle large dimension of the underlying matrix corresponding to the discretized function. Preferably, the tensor network approximation has a comparatively small rank.

In preferred embodiments, the method further comprises obtaining the approximated MPO representation based on a plurality of sample values of the function for a corresponding plurality of different input values.

For example, discretized sample values of the function, e.g. a multi-variate black box function, for associated inputs may be used to obtain tensor network and/or an MPS approximation of the function using skeleton decomposition or cross approximation.

In preferred embodiments, obtaining the approximated MPO representation comprises obtaining a matrix product state, MPS, representation of the function by cross-approximation techniques and obtaining an approximated MPO representation based on the MPS representation by enforcing a diagonal restriction.

Generally, the arbitrary functions may be approximated by first recovering an MPS, which may then be extended in a straightforward way to obtain the approximated MPO representation. The MPS representation may be converted into an MPO by enforcing the diagonal restriction and using the same set of sub-tensors obtained for the MPS representation of the function.

The approximated MPO representation of the function can have a comparatively small bond dimension. The approximated MPO representation/approximation however does not have a direct correspondence to a quantum circuit which can be determined without exponential computational difficulty. Rather, based on the approximated matrix product operator representation, an approximation rank is selected, which should be equal to or greater than the rank of the approximated MPO representation, for approximating the function with the orthogonal approximation, for which a more efficient encoding strategy exists.

In some embodiments, the approximation rank is greater than a rank of the matrix product operator representation of the function, wherein the rank of the matrix product operator representation is in particular a bond dimension of the matrix product operator representation.

The constraints of isometry on the isometric sub-tensors may benefit from increased ranks due to advantages

associated with increased degrees of freedom, such as to maintain a sufficient approximation accuracy for common problems.

It is noted that an accurate matrix product operator representation may be determined for some matrices/functions, but generally the matrix product operator representation may be obtained by an approximation algorithm, such as cross approximation or an algorithm based on singular value decomposition, for approximating the function with an MPO without significantly affecting the outcome of the method. The skilled person will further appreciate that the matrix product operator representation/approximation may already be known, and it may be sufficient to receive a matrix product operator representation from a suitable source.

The approximated MPO representation may comprise non-isometric sub-tensors, and may approximate the function with an error which may be smaller than 1%, or smaller than $10^{-6}$, e.g. depending on the application, and may also be called a non-orthogonal MPO approximation of the function. For example, for solving optimization problems, an approximation of the function with an error of about 1% may be sufficient. The skilled person will appreciate that not any matrix may be represented by an MPO representation with arbitrarily small accuracy, but the skilled person may still choose to apply the method in view of the increased inaccuracy of the MPO approximation, e.g. if no other way of performing the computation is possible, or if the comparatively low accuracy is sufficient for the respective computational problem.

Based on the bond dimension (rank) of the approximated MPO representation, the approximation rank may be chosen as the next power of two, i.e. $2^N$ with N being an integer number, or any power of two greater than the bond dimension of the approximated MPO representation. As an example, if the rank of the approximated MPO representation for the function is 3, the ranks chosen for the isometric sub-tensors of the orthogonal approximation may be 4 or 8. However, a decent approximation may in principle also be made if the approximation rank is equal to or smaller than the rank of the approximated MPO representation of the function, although then, the orthogonal approximation is more likely an inaccurate representation of the function.

Based on the implementation of the orthogonal approximation of the approximated MPO representation of the function, the largest eigenvalue of the function/approximated MPO representation may be obtained by applying the quantum circuit encoding of the orthogonal approximation multiple times in sequence to an input state, in a manner analogous to the classical "power method", and measuring the output.

To determine the orthogonal MPO approximation, the method comprises the determination of an initial guess for an orthogonal MPO, which corresponds to an MPO with isometric sub-tensors with appropriate ranks. The initial guess may be composed of random sub-tensors fulfilling the isometry condition.

Determining the orthogonal approximation in the form of the orthogonal MPO comprises determining an initial guess for the orthogonal approximation with isometric sub-tensors of the approximation rank, and starting with the initial guess, iteratively optimizing the orthogonal approximation based on an optimization algorithm minimizing a cost function subject to isometry constraints for the isometric sub-tensors, wherein the cost function attributes a cost to the orthogonal approximation based on a quality of the orthogonal approximation with respect to the approximated MPO representation.

In some embodiments, the orthogonal approximation is a matrix product operator, and the orthogonal approximation is mathematically equivalent to a tensor network where each intermediate isometric sub-tensor has two external, uncontracted indices as well as internal indices contracted with neighboring isometric sub-tensors in a chain-like fashion.

The uncontracted indices may correspond to the dimension of the input and output qubit state for each of the isometric subtensors, and the internal indices may be of the approximation rank.

In some embodiments, the approximation rank is a common bond dimension of all sub-tensors of the tensor network.

The initial guess is subsequently optimized based on an iterative optimization algorithm, such that a difference between the orthogonal approximation and the function approximated by the approximated MPO representation is minimized. The difference may be based on a norm of the difference, e.g. the Frobenius norm or the cosine norm of the difference between the orthogonal approximation and the approximated MPO representation of the function, and in particular the sub-tensors thereof.

In some embodiments, the cost function is based on a difference function of the function and a renormalized orthogonal approximation evaluated based on tensor network calculus, wherein the renormalized orthogonal approximation is based on the orthogonal approximation multiplied by a renormalization constant, wherein the cost function is in particular based on the Frobenius norm of the difference function evaluated based on tensor network calculus, and/or wherein the renormalization constant is selected such that the approximated MPO representation of the function divided by the normalization constant does not increase the trace of the state it acts on and/or such that the trace of a density matrix, on which the renormalized orthogonal approximation acted on, is equal to or smaller than 1 regardless of the initial state.

The renormalization constant may conserve the constraint that quantum operations may not increase the trace of the density matrix of a quantum state, i.e. given any input density matrix $\rho$, the orthogonal approximation A should fulfill: $\mathrm{Tr}[A_\rho A^\dagger] \leq 1$.

Given an arbitrary matrix M representing the function, the orthogonal approximation A may be renormalized by the renormalization constant c, such that the cost function of the difference is given as $C = ||cA - M||^2$, wherein $||\cdot||$ denotes the chosen norm of the difference, e.g. the Frobenius norm. In other words, the operation to be implemented in a quantum computer may be a renormalized matrix $c^{-1}M$ representing the function.

In some embodiments, the renormalization constant c is obtained for each iterative step of optimizing the orthogonal approximation A for the approximated MPO representation according to $c = \mathrm{Re}\frac{\mathrm{Tr}\,A^{\dagger}M}{||A||^2}$ or according to a gradient based optimization algorithm in order to minimize the cost function.

For example, the renormalization constant may be updated using the steepest descent on c in order to minimize the cost function.

Based on the cost function quantifying a difference between the (renormalized) orthogonal approximation and the approximated MPO representation of the function, the elements of the orthogonal approximation may be updated to minimize the cost function.

In some embodiments, the optimization algorithm comprises a gradient descent and is in particular based on a Riemannian gradient descent or an optimization algorithm derived therefrom.

In other words, the method may comprise (stochastically) determining a gradient of the difference between the orthogonal approximation and the approximated MPO representation of the function, and subsequently updating the orthogonal approximation according to the determined gradient.

The skilled person will appreciate that it may be preferable in some embodiments to minimize a difference between the orthogonal approximation and the approximated matrix product operator representation of the function, as it may reduce the computational complexity of the optimization. For example, a difference between the sub-tensors of the orthogonal approximation and the approximated matrix product operator representation of the function may be determined, and the respective isometric sub-tensor may be updated based on the difference. Any update on the isometric sub-tensors should conserve the isometry constraint, i.e. the updated isometric sub-tensor should be isometric.

In some embodiments, the orthogonal approximation is a matrix product operator, which can be expressed as

$$A^{l}_{m} = A^{l_1\,l_2\,\ldots\,l_n}_{m_1\,m_2\,\ldots\,m_n} = V_1{}^{l_1\,j_1}_{m_1} \cdot V_2{}^{l_2\,j_2}_{j_1\,m_2} \cdot \ldots \cdot V_n{}^{l_n}_{j_{n-1}\,m_n},$$

wherein $V_k$ are isometric, i.e. $V^{*}_{k}{}^{j'_{k-1}m'_k}_{l_k j_k} V_k{}^{l_k j_k}_{j_{k-1} m_k} = \delta_{j_{k-1}j'_{k-1}}\delta_{m_k m'_k}$ for any index k of the isometric sub-tensors, and wherein each isometric sub-tensor $V_k$ is in particular iteratively optimized by alternating descent to optimize the orthogonal approximation.

The alternating descent may be implemented as a stochastic gradient descent of each of the sub-tensors, e.g. in a pre-determined or random order, such that each of the isometric sub-tensors of the orthogonal approximation approaches the sub-tensors of the approximated matrix product operator representation of the function.

In some embodiments, a gradient of the cost function is determined based on a plurality of partial derivatives of the sub-tensors of the orthogonal approximation, e.g. by determining the partial derivative of the cost function with respect to the values of each sub-tensor, and by updating the elements of the orthogonal approximation based on the partial derivatives of a plurality of sub-tensors, e.g. all sub-tensors. The skilled person will appreciate that the optimization may comprise a stochastic optimization, e.g. that a partial derivative need not be determined for all parameters of the orthogonal approximation at each iteration, but a stochastically determined subset of the parameters may be updated, such as in stochastic gradient descent and related optimization algorithms.

The updated sub-tensors should however conserve the isometry constraint, e.g. by updating the isometric sub-tensors according to a Riemannian gradient descent. The Riemannian gradient descent may conserve the isometry constraint, e.g. by projecting an update vector and/or an updated sub-tensor onto the Stiefel manifold of isometric tensors.

For example, optimizing the orthogonal approximation under the isometry constraint can comprise determining a projection

$$\partial^{R}_{k} C \in \mathcal{T}_{V_k}$$

of a partial derivative of the cost function or an optimization vector derived therefrom onto a space tangent of a Stiefel manifold $St(m,p,\mathbb{C}) := \{M \in \mathbb{C}^{m\times p} | M^{\dagger}M = I_p\}$ of m × p isometric matrices at point $V_k$.

For example, a sub-tensor Vk may be updated according to $V_k \rightarrow V_k - \alpha\partial^{R}_{k} C$, where $\alpha$ is a step size, in an optimization algorithm similar to a steepest descent optimization. However, the partial derivative may also be initially used

to determine a search direction, e.g. based an adaptive moment estimation, and the search direction may be projected onto the space tangent of the Stiefel manifold.

In some embodiments, optimizing the orthogonal approximation under the isometry constraint comprises determining a search direction pk for sub-tensor $V_k$ based on a partial derivative of the cost function and, optionally, information from a previous iterative step of the optimization algorithm; and determining a projection $p_{k,tangent} \in \mathcal{T}_{V_k}$ of the search direction $p_k$ onto a space tangent to a Stiefel manifold $St(m,p,\mathbb{C}):=\{M\in\mathbb{C}^{m\times p}||M^{\dagger}M=I_p\}$, of m × p isometric matrices at point $V_k$, wherein the isomeric sub-tensor $V_k$ has dimensions of m × p when reshaped into a two-dimensional matrix.

The partial derivative and/or the search direction may subsequently be used to determine an update direction, and an isometric sub-tensor and/or the orthogonal approximation may be modified based on the update direction. For example, the modified sub-tensor and/or the modified orthogonal approximation may be retracted onto the Stiefel manifold for obtaining an updated sub-tensor and/or an updated orthogonal approximation.

In some embodiments, optimizing the orthogonal approximation under the isometry constraint comprises projecting a modified sub-tensor and/or modified orthogonal approximation, wherein the modified sub-tensor and/or the modified orthogonal approximation are modified based on the search direction and/or the update direction, onto the Stiefel manifold to the sub-tensor and/or the orthogonal approximation, respectively,

$$V_k \rightarrow \mathcal{R}_{V_k}\left(\vec{V}_k^{update}\right),$$

and/or comprises updating a sub-tensor Vk by determining a retraction of an update to the sub-tensor Vk onto the manifold wherein the retraction is based on an update direction $\vec{V}_k^{update}$ which encodes a direction of an update to the sub-tensor $V_k$ based on the partial derivative of the cost function.

The retraction may project the update vector $\vec{V}_k^{update}$ onto the product of Stiefel manifolds with isometric sub-matrices, e.g. according to $V_k \rightarrow \mathcal{R}_{V_k}\left(-\alpha\,\partial_k^R C\right)$, thereby enforcing the isometry constraint at all iterative steps. For example, an updated intermediate sub-tensor may be determined based on the projection of an update gradient onto the space tangent of the Stiefel manifold, and the updated intermediate sub-tensor may be retracted onto the Stiefel manifold.

The skilled person will appreciate that this technique may be extended to optimization techniques, which may include momentum, e.g. based on the gradient determined in previous iterations, such that the update vector $\vec{V}_k^{update}$ may be a function of the projection of the partial derivative on the tangent of the Stiefel manifold as well as of a computation result from a previous iterative step. For example, the iterative optimization may be based on an adaptive moment based optimization algorithm. Thus, in more general terms, the update of the isometric sub-tensors may be based on an update function, which is based on the projection of a partial derivative of the cost function on the tangent of the Stiefel manifold, wherein the update function determines an intermediate update, and/or based on a retraction of the intermediate update onto the Stiefel manifold, such that the resulting sub-tensor/orthogonal approximation is isometric.

In some embodiments, optimizing the orthogonal approximation under the isometry constraint comprises updating the orthogonal approximation by updating all isometric sub-tensors, with each isometric sub-tensor $V_k$ being updated by performing a retraction on a Stiefel manifold $St(m,p,\mathbb{C}):=\{M\in\mathbb{C}m\times p||M^{\dagger}M=Ip\}$, of m × p isometric matrices at point $V_k$ in an updating direction, wherein the isomeric sub-tensor $V_K$ has dimensions of m × p when reshaped into a two-dimensional matrix, and wherein the updating direction is a direction of minimizing the cost function based on a partial derivative of the cost function, and in particular using the projection $p_{k,tangent}$ as an updating direction for updating the isomeric sub-tensor $V_k$.

The skilled person will appreciate that different retractions may be used in embodiments, such as the Cayley retraction or the singular value decomposition, just to give two examples, and the skilled person may select a suitable retraction from a plurality of known retractions.

The isometric sub-tensors can be reshaped into matrices, which are square for intermediate sub-tensors of the orthogonal approximation, and the reshaped matrices corresponding to the intermediate sub-tensors are unitary, based on the isometry constraint for the sub-tensors during the iterative optimization of the orthogonal approximation.

In some embodiments, isometric sub-tensors of the orthogonal approximation at ends of the orthogonal approximation are isometric and intermediate tensors are unitary, when reshaped into to a two-dimensional matrix, prior to extending the orthogonal approximation, such that all isometric sub-tensors are unitary after reshaping the isometric sub-tensors into square matrices.

To obtain a set of unitary matrices, which can be implemented in a quantum circuit, the sub-tensors at the end of the chain of tensors (sometimes also called border cores) can be extended using ancilla qubits, e.g. by preparing ancilla

qubits in the zero state |o> to be multiplied with the first isometric sub-tensor, and by implementing a post selection at the opposite end of the chain of tensors.

Thus, the method may comprise extending the border cores of the orthogonal approximation, such that all isometric sub-tensors are unitary after reshaping the isometric sub-tensors into square matrices. Extending the orthogonal approximation may be part of determining an initial guess for the orthogonal approximation or may be performed at the beginning of or after the orthogonal approximation has been iteratively optimized. For example, the initial guess may be composed of sub-tensors, which can be reshaped into unitary matrices, and the determination of the cost function may account for an implicit extension of the orthogonal approximation.

In some embodiments, extending the orthogonal approximation is based on providing one or more additional ancilla qubits as an input to a first end of the tensor network, wherein the method in particular provides at least log R additional ancilla qubits, wherein R is the approximation rank.

In some embodiments, extending the orthogonal approximation comprises a measurement of qubits at a second end of the tensor network, wherein a selection of the results with a predetermined measurement result for the qubits measured at the second end of the tensor network is part of implementing the approximated MPO representation of the function.

Based on the addition of ancilla qubits and the post-selection, all sub-tensors may be square after the appropriate reshape and may therefore form a set of unitary matrices, which may be implemented in a quantum circuit, by decomposing the isometric sub-tensors into quantum gates of the respective quantum architecture, e.g. a combination of single-qubit rotations and CNOT gates.

The skilled person will appreciate that the extension can be made prior to iteratively optimizing the orthogonal approximation or afterwards. In other words, it is possible to define the initial guess based on an extended matrix product operator, or to extend the orthogonal approximation after it has been iteratively optimized, e.g. by introducing and filling in additional elements of the border cores, such that the resulting border cores are unitary after the appropriate reshape.

In some embodiments, the method further comprises implementing the orthogonal approximation of the function as a quantum circuit on quantum hardware based on the encodings of the isometric sub-tensors into quantum gates.

The decompositions of the respective isometric sub-tensors may be combined to implement the orthogonal approximation based on a sequential application of the respective isometric sub-tensors, wherein an output state of log R qubits resulting from a unitary operation corresponding to one of the sub-tensors may be an input for the unitary operation corresponding to the next isometric sub-tensor in the tensor network.

In some embodiments, implementing the orthogonal approximation of the function as a quantum circuit is based on a sequential application of the isometric sub-operations to a set of qubits and rearranging the unitary matrices into a quantum network.

As a result, the depth of the quantum circuit may only scale polynomially with the number of qubits, as opposed to an exponential scaling of a general decomposition of a matrix into single- and two-qubit gates.

In preferred embodiments, applying the quantum circuit multiple times in a concatenated sequence of quantum circuits comprises preparing a number of sets of ancilla qubits in an initial state, wherein the number is at least equal to a number of times the quantum circuit is applied.

Specifically, for each of the extended orthogonal approximations a corresponding input of ancilla qubits is prepared, which are each initialized to the respective initial state of the ancilla qubits, e.g. the "zero", "one", or "ground" state.

In preferred embodiments, each set of ancilla qubits comprises a number of qubits equal to the logarithm of the approximation rank.

In preferred embodiments, a subsequent quantum circuit in the concatenated sequence of quantum circuits acts on a respective set of ancilla qubits and a set of computation qubits on which the previous quantum circuit has acted.

In other words, the method may start with initializing a set of initial computation qubits and a first set of ancilla qubits, which are acted on by the first quantum circuit in the concatenated sequence of quantum circuits, and a second quantum circuit in the concatenated sequence of quantum circuits may act on the first set of ancilla qubits, a second set of ancilla qubits and a subset of the initial computation qubits, which may be smaller than the set of initial computation qubits by the number of ancilla qubits in the second set of ancilla qubits.

In preferred embodiments, for each time the quantum circuit is applied, the method comprises measuring a set of post-selection qubits on which the respective quantum circuit has acted, and which are not acted on by subsequent applications of the quantum circuits in the concatenated sequence of quantum circuits.

Post selection may be based on the measurement results of the post selection qubits of each of the quantum circuits in the concatenated sequence of quantum circuits. For example, a result may be recorded for the purposes of determining the maximum eigenvalue of the approximated MPO representation of the function, when all of the post-selection qubits are measured in the |o> state.

In preferred embodiments, each set of post-selection qubits comprises a number of qubits equal to the logarithm of the approximation rank.

In preferred embodiments, preparing the initial quantum state comprises applying a Hadamard gate to each qubit of a set of initial computation qubits.

Applying a Hadamard gate to each qubit of the initial computation qubits may prepare a vector of computational basis states of "ones", to support the quantum power method for determining a maximum eigenvalue of the function.

The quantum computation system implementing the method may comprise a number of initial computation qubits equal to the number of isometric sub-tensors, wherein in particular each quantum operation implementing one of the isometric sub-tensors of the first quantum circuit in the concatenated sequence may act on a respective one of the initial computation qubits. The first quantum operation in a cascade of quantum operations implementing the quantum circuit may act on the set of ancilla qubits. Subsequent quantum operations in the cascade may act on the respective one of the computation qubits and on a number of processed qubits equal to the logarithm of the approximation rank, wherein the processed qubits have been acted on by the previous quantum operation in the cascade of quantum operations.

Each of the quantum operations may have as an output one quantum state of a qubit not acted on by the subsequent quantum operations in the cascade of quantum operations. The output of the quantum operations may form the computation qubits for the next quantum circuit in the concatenated sequence of quantum circuits. The last quantum operation in the cascade of quantum operations may comprise as an output a quantum state for processing by the subsequent quantum circuit as well as a number of processed qubits equal to the logarithm of the approximation rank, which may be measured as post-selection qubits.

The skilled person will appreciate that the output of each quantum operation, which is not acted upon by the subsequent quantum operation in the cascade, may comprise more than a single qubit and a corresponding number of initial computation qubits may be prepared for each of the quantum operations of the first circuit. However, in the following, reference will be made mostly to examples with a single initial computation qubit for each of the quantum operations.

In preferred embodiments, applying the quantum circuit p times in a concatenated sequence of quantum circuits to an input quantum state comprises preparing p sets of ancilla qubits, wherein each set of ancilla qubits is acted upon by a respective one of the quantum circuits and comprises a number of ancilla qubits equal to the logarithm of the approximation rank.

Each quantum circuit after the first quantum circuit in the concatenated sequence of quantum circuits may act on a respective one of the sets of ancilla qubits and on processed computation qubits acted on by the previous quantum circuit in the concatenated sequence, wherein the processed computation qubits do not form part of the post-selection qubits of the previous quantum circuit.

According to a second aspect, the invention relates to a processing system for determining a quantum encoding of an arbitrary power of an approximation of a function to be implemented on quantum hardware. The system is configured to obtain an approximation of the function in the form of an approximated matrix product operator, MPO, representation of the function, and to select an approximation rank based on the approximated MPO representation. The system is further configured to determine a rank-based orthogonal approximation of the approximated MPO representation in the form of an orthogonal MPO with isometric sub-tensors of the approximation rank. The system is further configured to determine an implementation of an arbitrary power of the orthogonal approximation in a quantum circuit based on encodings of the isometric sub-tensors into quantum gates acting on computation qubits and an initialized set of ancilla qubits, wherein in the implementation, the quantum circuit is applied multiple times in a concatenated sequence of quantum circuits to an input quantum state.

The system according to the second aspect may also benefit from any feature of the preferred embodiments of the first aspect.

The processing system may comprise a single processing unit or may comprise a plurality of processing units, which may be functionally connected. The processing units may comprise a microcontroller, an ASIC, a PLA (CPLA), an FPGA, or other processing device, including processing devices operating based on software, hardware, firmware, or a combination thereof. The processing devices can include an integrated memory, or communicate with an external memory, or both, and may further comprise interfaces for connecting to sensors, devices, appliances, integrated logic circuits, other controllers, or the like, wherein the interfaces may be configured to receive or send signals, such as electrical signals, optical signals, wireless signals, acoustic signals, or the like.

The system may be configured to obtain the approximated MPO representation, e.g.by executing a cross approximation or decomposition algorithm for the function or by receiving the approximated MPO representation from a suitable source, such as a database.

To obtain the orthogonal approximation in the form of the orthogonal MPO, the system is configured to determine an initial guess for an orthogonal approximation of the function in the form of a tensor network with isometric sub-tensors of the approximation rank, and starting with the initial guess, iteratively optimize the orthogonal approximation based on an optimization algorithm minimizing a cost function subject to isometry constraints for the isometric sub-tensors, wherein the cost function attributes a cost to the orthogonal approximation based on a quality of the orthogonal approximation with respect to the approximated MPO representation.

In some embodiments, the system is further configured to extend the orthogonal approximation, such that all

isometric sub-tensors are unitary after reshaping the isometric sub-tensors into square matrices.

In preferred embodiments, the system is further configured to communicate the implementation to a quantum computing system for executing the implementation on quantum hardware.

The implementation may allow determining a maximum element, in particular a maximum eigenvalue, of the orthogonal approximation of the function.

According to a third aspect, the invention relates to a hybrid quantum-classical computing system comprising a system according to the second aspect and quantum computing hardware. The hybrid quantum-classical computing system is configured to receive the implementation from the processing system, implement the implementation in the quantum computing hardware, and receive a calculation result from the quantum computing hardware.

According to a fourth aspect, the invention relates to a non-transitory medium comprising machine-readable instruction, which, when executed by a processing system, implement a method according to the first aspect and/or a system according to the second aspect and/or the third aspect.

DETAILED DESCRIPTION OF EMBODIMENTS

The features and numerous advantages of the methods and systems according to the present invention will best be understood from a detailed description of preferred embodiments with reference to the accompanying drawings, in which:

| | |
|---|---|
| Fig. 1 | schematically illustrates an example of a quantum computation system; |
| Fig. 2 | illustrates an example of a computer-implemented method for encoding an higher power of a function approximation in a quantum circuit; |
| Fig. 3 | schematically illustrates a flowchart for determining a matrix product operator representation based on a given intended matrix; |
| Fig. 4 | schematically illustrates a strategy for determining a quantum circuit encoding for an approximation of an intended matrix according to an example; |
| Figs. 5 and 6 | illustrate results obtained from applying the encoding strategy discussed in conjunction with Fig. 4 to two different intended matrices; |
| Figs. 7A, 7B | illustrate experimental runtime results from implementing a method for determining a quantum circuit when approximating a Diagonal matrix according to an example; |
| Figs. 8A-F | illustrate a schematic flow chart for determining a quantum computer implementation for an algorithm of finding the largest eigenvalue of a matrix approximating a function according to an example; |
| Figs. 9A, 9B | illustrate detailed implementations of a quantum power method for finding the largest eigenvalue of a matrix approximating a function on the basis of a quantum circuit encoding of a computational operation according to respective examples; and |
| Figs. 10A-10D | illustrate examples of measurement probabilities obtained for quantum circuit encodings and a simulated quantum power method of a two-dimensional Ackley function as contour plots. |

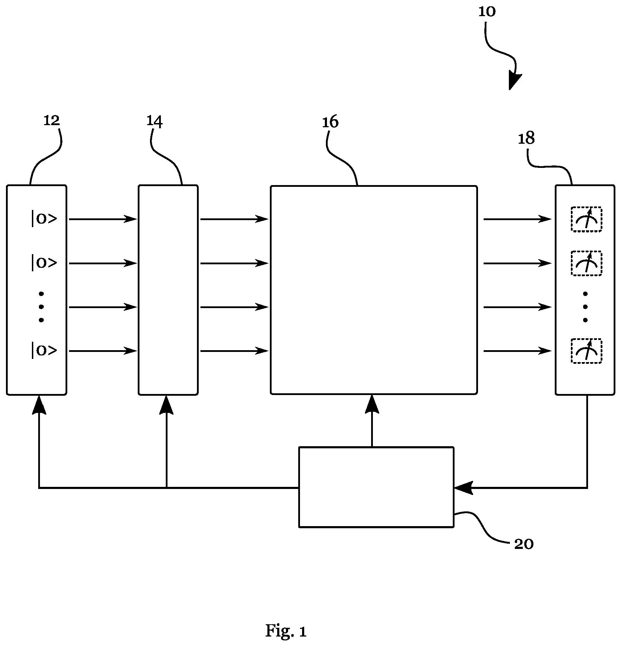

Fig. 1 schematically illustrates an example of a quantum computation system 10. The system 10 comprises a qubit register 12 comprising computation qubits, a state preparation module 14 for preparing quantum states of the computation qubits in a predetermined quantum state, a quantum matrix multiplication module 16 for transforming the predetermined quantum state according to a multi qubit operation, and a measurement module 18, for measuring an outcome of a quantum computation, e.g. by projective measurement of the state of some or all of the qubits. A processing system 20 can initialize the computation qubits in the qubit register 12, define operations of the state preparation module 14 and/or the quantum matrix multiplication module 16, and may retrieve a measured outcome from the measurement module 18, e.g. by determining and sending control operations to hardware of a quantum computation system 10.

The state preparation module 14 and the quantum matrix multiplication 16 may be similar in terms of construction and may implement a combination of single- and multi-qubit quantum gates for affecting the state of the qubits of the qubit register 12. It is noted that, in some embodiments, no state preparation module 14 may be necessary, and the combination of quantum gates determined by the quantum matrix multiplication module 16 may directly act on the quantum states of the

qubits initialized in the qubit register 12 in some initialized quantum state. The types of quantum gates implemented in a quantum circuit by the state preparation module 14 and/or the quantum matrix multiplication module 16 may depend on the architecture of the specific quantum hardware employed, e.g. based on native gates of the quantum hardware. The state preparation module 14 and the quantum matrix multiplication module 16 may compute a quantum gate arrangement and/or send control operations to control quantum hardware, such that the quantum hardware realizes a desired computational operation on a certain quantum state.

However, the decomposition of an arbitrary computational operation into a quantum circuit is generally a hard computational problem, whose complexity usually scales exponentially with the number of qubits involved. Moreover, for a general operation, the depth of the circuit, i.e. the number of consecutive quantum gates for realizing a quantum operation may also scale exponentially with the number of qubits. Although efficient encodings of problems into a combination of quantum gates are known for specific types of problems, the encoding of many desirable problem types into a quantum circuit can still represent a significant obstacle for realizing quantum computation.

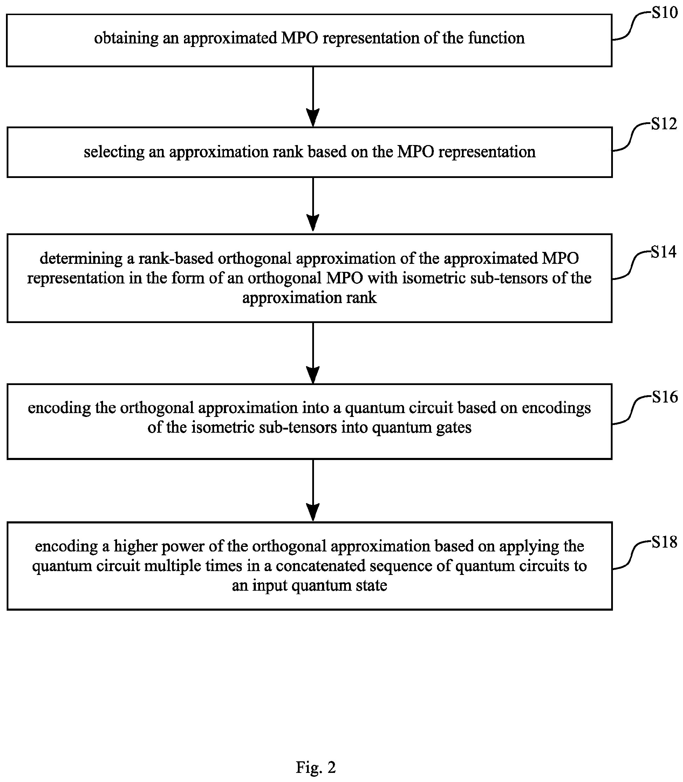

Fig. 2 illustrates an example of a computer-implemented method for encoding an arbitrary power of a matrix product operator approximation of a function in a quantum circuit. The method comprises obtaining the approximated matrix product operator representation of the function (S10), and selecting an approximation rank based on the MPO representation (S12). The method further comprises determining a rank-based orthogonal approximation of the approximated MPO representation in the form of an orthogonal MPO with isometric sub-tensors of the approximation rank. The method further comprises encoding the orthogonal approximation into a quantum circuit based on encodings of the isometric sub-tensors into quantum gates (S16), and encoding an arbitrary power of the orthogonal approximation based on applying the quantum circuit multiple times in a concatenated sequence of quantum circuits to an input quantum state (S18).

Determining the orthogonal approximation may comprise determining an initial guess for an orthogonal approximation of the function in the form of a tensor network with isometric sub-tensors of the approximation rank, and starting with the initial guess, iteratively optimizing the orthogonal approximation based on an optimization algorithm minimizing a cost function subject to an isometry constraint for the isometric sub-tensor.

The cost function may attribute a cost to the orthogonal approximation of the function based on a quality of the orthogonal approximation with respect to the approximated MPO representation. Thus, instead of directly implementing the approximated MPO representation in a quantum circuit, the method comprises approximating the approximated MPO representation with an orthogonal approximation, which is constructed in the form of a tensor network with isometric sub-tensors (in the following also called isometric cores).

The constraint of isometry of the sub-tensors of the orthogonal approximation can be enforced at each step of the iterative optimization, e.g. based on a modified gradient descent method and/or a retraction of any updated sub-tensor onto a isometric sub-tensor, such that the optimization algorithm converges towards an approximation of the function with isometric sub-tensors. Generally, the approximation rank should be at least equal to the rank of the approximated matrix product operator representation of the function, such that the constraint of isometric sub-tensors may be at least partially compensated by greater degrees of freedom in the contracted indices of the orthogonal approximation.

The isometric sub-tensors may be reshaped into square matrices for any sub-tensors between the ends of the tensor network (the so-called border cores), which may be unitary after the appropriate reshape. These sub-tensors, which can be reshaped into unitary matrices, can be implemented directly as quantum circuits with known decomposition algorithms, which may be computed efficiently due to the smaller size of the reshaped matrix/isometric sub-tensor. The skilled person will appreciate that the sub-tensors may be implemented without explicitly reshaping the isometric sub-tensors into a matrix.

For implementing the border cores, i.e. the isometric sub-tensors arranged at the ends of the tensors network in the form of a tensor train, the ends of the tensor network representing the orthogonal approximation may be extended, such that all isometric sub-tensors can be reshaped into unitary matrices, e.g. by providing ancilla qubits at one end of the tensor network, and introducing measurement with post-selection at the opposite end, such that the border cores can equally be reshaped into square matrices. Such an extension can be preconfigured as part of the initial guess for the orthogonal approximation, or may be configured, when the orthogonal approximation has been iteratively optimized, e.g. by completing the border cores with additional indices, such that they are square matrices, when the appropriate reshape is applied, and filling in any missing matrix elements, such that the resulting matrix is unitary.

As a result, the orthogonal approximation can be implemented in a quantum circuit based on decompositions of the isometric sub-tensors, which are smaller in memory than a matrix representation of the full function. As a result, the circuit depth of the quantum circuit for the entire function may only scale polynomially with the number of qubits, allowing more complex computations on near-term quantum hardware, with the number of qubits determining the size of the memory space for holding the computation state.

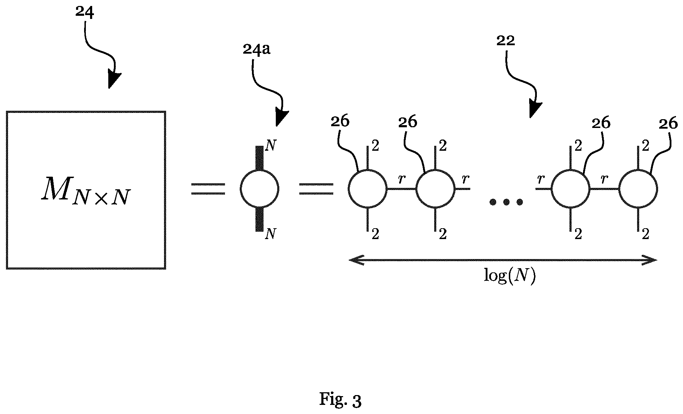

Fig. 3 schematically illustrates a flowchart for determining a matrix product operator representation 22 based on a given function provided in the form of a matrix 24 (illustrated as a square matrix $M_{NxN}$) and in a Penrose graphical representation 24a according to an example. The matrix 24 may correspond to discretized function values of the function,

which is to be implemented on quantum hardware, with computational basis states of a qubit register 12 with n qubits, wherein $N=2^n$.

The matrix 24 associated with the function may be represented in a Penrose diagram representation 24a by a circle with two uncontracted indices of dimension N. This function 24 can be approximated or represented by a matrix product operator representation 22 composed of a plurality of sub-tensors 26, wherein summation according to the contracted indices recovers the respective elements of the matrix 24 representing the original function, e.g. according to:

$$A^{l}_{m} = A^{l_1 l_2 \dots l_n}_{m_1 m_2 \dots m_n} = V_1{}^{l_1 j_1}_{m_1} \cdot V_2{}^{l_2 j_2}_{j_1 m_2} \cdot \dots \cdot V_n{}^{l_n}_{j_{n-1} m_n}, \qquad (1)$$

wherein an MPO representation 22 for a matrix 24, $A^l_m$ may be composed of a plurality of log (N) sub-tensors 26, $V_k$, with uncontracted indices $l_k$, $m_k$, and contracted indices $j_k$, $j_{k-1}$. Each sub-tensor 26 indicated by circles in Fig. 3 has four indices, except for the boundary cores at opposite ends of the MPO representation 22 (which have three), wherein contracted indices (protruding horizontally) are MPO bond indices of the bond dimension r. The uncontracted indices have the dimension of the quantum state of one qubit, i.e. 2, in the example.

Such an MPO representation 22 may be found for a matrix 24 or an approximation thereof with several known algorithms. In principle any matrix 24 may be represented in a matrix product operator (MPO) representation 22, by decomposing the matrix 24 into a set of matrix products with the property that their matrix product equals a specific element of the matrix 24.

If only a few function values are known for a black box function, a matrix product operator/state approximation of the function may be obtained by interpolation, e.g. using cross approximation techniques, such as skeleton decomposition or TT cross approximation for obtaining an approximated tensor network of the function, based on the known function values. The approximated tensor network may correspond to an MPO or an MPS approximation of the function.

However, while it is possible to efficiently encode an MPS state in a quantum circuit, e.g. as shown by *Lubasch et al.,* no corresponding strategy exist for general MPOs.

Nonetheless, the method illustrated in the example of Fig. 2 may be used to provide a quantum circuit for an approximation of the function.

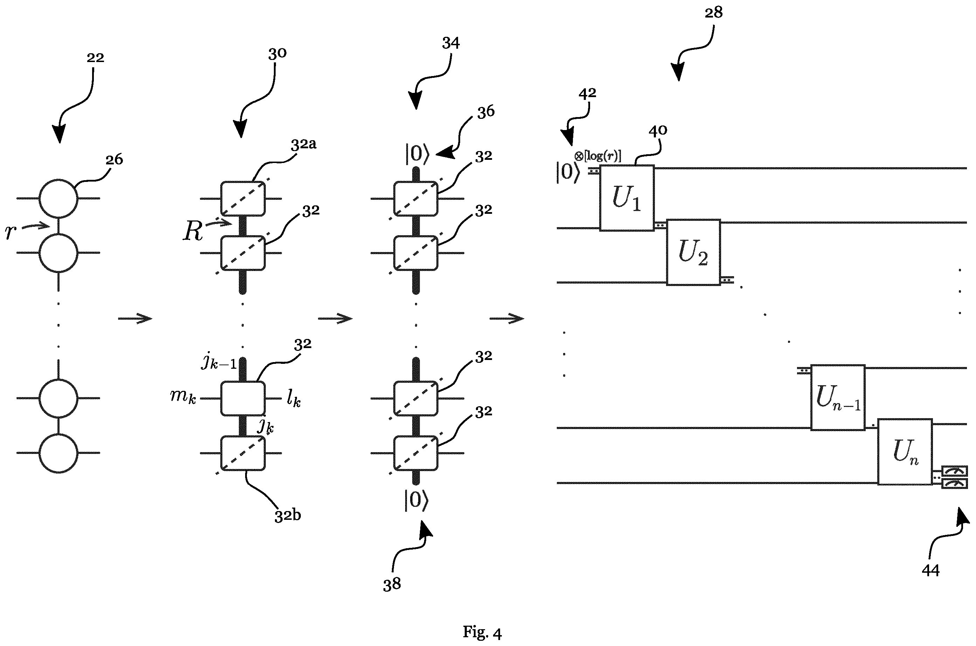

Fig. 4 schematically illustrates a strategy for determining a quantum circuit 28 encoding for an approximation of a function according to an example. The function may initially represented by an approximated MPO representation 22 with log(N) (i.e. logarithm of the order of the square matrix to be represented), or fraction thereof, sub-tensors 26 having a rank r, which can be obtained based on a suitable decomposition and/or approximation algorithm.

Based on the rank *r* of the approximated MPO representation 22, an approximation rank *R* is selected, which should be equal to or greater than the rank r of the approximated MPO representation 22 and may be a power of two, i.e. $2^k$ with k being an integer number. Based on the selected approximation rank R, the method may generate an initial guess for an orthogonal approximation 30 with isometric sub-tensors 32, 32a, 32b, such that all isometric sub-tensors 32, 32a, 32b are isometric, when reshaped into two-dimensional matrices, wherein a bond dimension of the orthogonal approximation 30 is equal to the approximation rank R. The isometric sub-tensors 32, 32a, 32b for the initial guess of the orthogonal approximation 30 may be randomly generated, e.g. selected from random isometric sub-tensors 32, 32a, 32b.

Starting with the initial guess for the orthogonal approximation 30, the method may proceed by iteratively optimizing the orthogonal approximation 30 based on an optimization algorithm with the goal of minimizing a distance metric to the approximated MPO representation 22, wherein the intermediate steps of the optimization algorithm can maintain isometry of the sub-tensors 32, 32a, 32b.

Since the approximated MPO representation 22 may not be unitary if reshaped into a matrix, it cannot be directly implemented on a quantum computer. Furthermore a quantum operation A would have to conserve the trace

$$\mathrm{Tr}\left[A \rho A^{\dagger}\right] \leq 1. \qquad (2)$$

Thus, it would be preferred to minimize a difference metric with respect to a renormalized orthogonal approximation 30, e.g. according to

$$C = ||cA - M||^2, \qquad (3)$$

such that the inequality of Eq (2) is fulfilled. As a result, a renormalized approximated MPO representation, e.g. $c^{-1}$ M, may be realized in a quantum circuit instead of the approximated MPO representation 22, i.e. M, while A indicates the orthogonal approximation 30. From a practical point of view, it may be necessary for some computations to remember this normalization factor c and take it into account at the end of calculations, e.g. for interpreting the result when the result is

dependent on the complex output quantum state.

For the optimization algorithm, a processing system, such as a computer, may be tasked to find the minimum of the cost function under the isometry constraint for all sub-tensors 32, 32a, 32b, written in short form as $V_k$, i.e.

$$\text{minimize}_{c,A}\ C = \|cA - M\|^2$$
$$\text{subject to } V_k : V_k^\dagger V_k = I \text{ for all } k = 1, \ldots, n, \tag{4}$$

where ||*|| denotes a suitable norm, such as the Frobenius norm, and wherein the optimum is taken by both c and A. This optimization may be implemented as an alternating descent, by determining a partial derivative of the cost function with respect to any isometric sub-tensor 32, 32a, 32b under the isometry constraint, and by optimizing the orthogonal approximation 30 based on the partial derivatives, such as by a gradient descent based algorithm, e.g. stochastic gradient descent or a momentum based algorithm, such as adaptive moment estimation.

The isometry constraint may be observed by ensuring the isometry of the sub-tensors 32, 32a, 32b at each update step of the optimizing algorithm and/or by considering the isometry constraint as part of the gradient direction.

Generally, any m times *p* isometric matrix belongs to the Stiefel manifold

$$\text{St}(m, p, \mathbb{C}) := \{ M \in \mathbb{C}^{m\times p} \mid M^\dagger M = I_p \} \tag{5}$$

which is a Riemannian manifold. The cost function *C* to be minimized can thus be defined on the Cartesian product of n Stiefel manifolds. To find a set of isometric matrices $V_k$ minimizing this cost function, one can use gradient-based optimization methods, such as Riemannian gradient descent which works with optimization problems under constraints as in the present case.

In regular gradient-based methods, such as gradient descent, the variables being optimized are updated by moving in the opposite direction of the cost function gradient:

$$V_k \rightarrow V_k - \alpha\, \partial_k C \tag{6}$$

where $\alpha$ is a step size. In the Riemannian generalization of these methods, to determine the direction of this movement, instead of $\delta_k C$, its projection $\delta_k{}^R C$ onto the space tangent to the Stiefel manifold at point $V_k$ can be used. Further, to update the values of matrices $V_k$ based on the partial derivative and/or its projection, a retraction onto the manifold can be used:

$$V_k \rightarrow \mathcal{R}_{V_k}\left(-\alpha\, \partial_k^R C\right) \tag{7}$$

In optimization methods that use information from previous optimization steps, such as gradient descent with momentum, the concept of vector transport is also used, which is a generalization of the concept of parallel transport, and may therefore implemented directly based on the afore-mentioned scheme.

The Riemannian formulation of gradient descent can be implemented as an iterative procedure that at every step computes the Riemannian gradient of the optimization function *C* at the current point on the manifold, and may then use the chosen retraction in the direction of the negative gradient to find the next point.

The algorithm may then be implemented as follows:

Step 0: Obtain an initial guess for the orthogonal approximation 30;

Step 1: Find a renormalization constant c that minimizes the cost function, e.g. of Eq. (3), with a fixed orthogonal approximation 30 (i.e. with A being constant during this step);

Step 2: Find a new approximation A via one step of the Riemannian gradient descent for the problem of Eq. (4), wherein the renormalization constant c may be constant during this step, and then go back to step 1.

The iterative algorithm may be terminated at any point, e.g. after predetermined number of iterations, or when a predetermined cost threshold has been achieved by the cost function.

Once an optimized orthogonal approximation 30 is obtained, which may be a orthogonal approximation 30 of the renormalized function, $c^{-1}M$, all the inner sub-tensors 32 of the orthogonal approximation 30 should already be unitary

matrices after a corresponding reshape to a two-dimensional matrix.

However, the sub-tensors 32a, 32b at the boundaries (i.e. $V_1$ and $V_n$, also called border cores) may only be isometries. However, the border cores 32a, 32b may be extended to unitary matrices by extending the sub-tensors under the isometry condition with the addition |0> states 36 at one end of the tensor network, and a projection onto |0> states 38 at the opposite end of the tensor network to maintain the correspondence with the approximated MPO representation 22. By extending the orthogonal approximation 30, an extended orthogonal approximation 34 can be obtained, which features only sub-tensors 32 which can be reshaped into unitary matrices.

As all the sub-tensors 32 can be reshaped into unitary matrices, the transition to the quantum circuit can be implemented by concatenating the isometric sub-tensors 32 in a cascade of quantum operations 40, implemented as unitary operations $U_1$-$U_n$, as shown in the quantum circuit 28 in the example of Fig. 4. Here, the uncontracted indices of the isometric sub-tensors 32 may correspond to input and output states of the respective quantum operation 40, while the contracted indices of the isometric sub-tensors 32 correspond to quantum states, which are input for the next unitary operation 40 in the concatenated chain of unitary operations 40. Thus, each unitary operation 40 has a number of 1+log(R) qubit inputs and qubit outputs, and log(R) qubits are processed by the subsequent unitary operation 40 in the concatenated chain of unitary operations 40. The decomposition of these sub-tensors 32 into quantum gates may be performed based on known decomposition techniques for the respective quantum hardware architecture.

The upper |0> state 36 as the input to the upper border core 32a of the extended orthogonal approximation 34 may correspond to preparing additional ancilla qubits 42 in the "zero" states. At the same time, the lower |0> state 38 as the input to the upper border core 32a of the extended orthogonal approximation 34 may correspond to a projection onto the zero states, i.e. measurements with post-selection.

The skilled person will appreciate that the actual quantum state, which is prepared or measured for these operations, can be changed, as long as the correspondence with the approximated MPO representation 22 is preserved, e.g. by preparing and post-selecting based on |1> states, or different states, based on an appropriate basis change. However, for the sake of brevity, a preparation of "|0>" states and a corresponding post-selection will be considered in the following.

Thus, as shown in the example of Fig. 4, the quantum circuit 28 may be implemented by the following steps of a quantum processing system:

Step 1: Prepare ancilla qubits 42 in the zero state $|0\rangle^{\otimes \log_2(R)}$. The remaining qubits remain "with their legs open" (solid horizontal lines on the left side of the quantum circuit 28), i.e. the qubits will be encoded according to some initial state based on the input for the computation.

Step 2: Sequentially apply gates $U_1$, ..., $U_n$ which should be decomposed into quantum gate implementations based on the employed quantum hardware, such as a combination of one-qubit and two-qubit operations.

Step 3: Measure ancilla qubits 44 in the computational basis, and if all measurement outcomes in Step 3 are equal to "0", record the result, else go back to step 1.

It is noted that for the post-selection one should measure not the qubits that were originally introduced as ancilla qubits 42 to the initial border core 32a, but qubits from the other end of the orthogonal approximation 30, i.e. corresponding to the opposite border core 32b (see Fig. 4).

The algorithm implements a quantum circuit 28 corresponding to the approximated MPO representation 22 only if all ancilla qubit measurements 44 are equal to |0>, e.g. a bitstring of zeros is obtained for the corresponding qubits. The quantum system's state just before the measurement determines the likelihood of this "successful" result. This implies that the initial state of the system to which the quantum scheme is applied affects this probability.

$$\mathrm{Pr}_{suc} = \mathrm{Tr}\left[\langle 0|_{a_2} \boldsymbol{U} \rho_{\mathrm{in}} \otimes |0\rangle\langle 0|_{a_1} \boldsymbol{U}^{\dagger}\, |0\rangle_{a_2}\right]. \quad (8)$$

The system's initial state $\rho_{in}$ may be determined by the specific computational task. One can average the probability value over all probable initial states of the system $\langle Pr_{suc}\rangle$ to ignore this dependence. To do this, $\rho_{in}$ can be considered as a maximally mixed state, which is a uniform mixture of states from an orthonormal basis. In this case, $\rho_{in} = 1/2^n I$, utilizing $\langle 0|_{a2} U |0\rangle_{a1} = A$, and the average probability may be obtained as

$$\langle Pr_{suc}\rangle = \frac{||A||^2}{2^n} \simeq \frac{||M||^2}{c^2 2^n}. \quad (9)$$

That is, the success probability may be mainly determined by the norm of the orthogonal approximation 30. Meanwhile, since A is approximately equal to $c^{-1}$ *M,* it can be seen how the success probability is related to the normalization coefficient c, i.e. the higher the normalization coefficient, the lower the success probability. In other words, there may be a trade-off between the accuracy of the approximation and the success probability. The best theoretical value of the normalization constant c was found to be $c = \lambda_{max}(M)$, i.e. equal to the largest eigenvalue of the approximated MPO representation 22. The function may be approximated with sufficient accuracy provided that the approximation rank R of the orthogonal approximation 30 is sufficiently large.

It is noted that the depth of the quantum circuit 28 may scale polynomially with the approximation rank *R* and the size of the approximation rank *R* may further increase the complexity of decomposing the isometric sub-tensors 32 into combinations of quantum gates, as each of the unitary operations $U_k$ acts on $\log_2 R+1$ qubits, where R is the rank of the orthogonal approximation A.

It is also noted that numerical strategies to approximately decompose general multi-qubit unitary operations 40 with combinations of single qubit and CNOT gates can achieve a CNOT gate count close to the theoretical lower limit presented in Shende et al. (Minimal universal two-qubit controlled-not-based circuits. Phys. Rev. A, 2004*),* i.e. an arbitrary decomposed m-qubit gate requires $4^{m-1}$ CNOT gates, thus in the present case it would require $n*_4^{\log R+1}$, i.e. approximately $n*R^2$ CNOT gates, in total. Therefore, generally the lower the approximation rank R selected for the orthogonal approximation 30, the simpler the quantum circuit 28 turns out, but the worse the accuracy of the orthogonal approximation 30.

In order to demonstrate the capabilities of the method, frequently-used matrices are considered and encoded into many-qubit quantum circuits 28. Specifically, a matrix with a discretized linear function on a diagonal matrix $M_D$ and a Laplace operator $M_L$, corresponding to of the second derivative matrix after discretization, are considered, both of which are not unitary:

$$M_D = \begin{pmatrix} 0 & & & \\ & 1 & & \\ & & \ddots & \\ & & & 2^n - 1 \end{pmatrix}; \qquad M_L = \begin{pmatrix} 2 & -1 & & \\ -1 & 2 & \ddots & \\ & \ddots & \ddots & -1 \\ & & -1 & 2 \end{pmatrix} \tag{10}$$

with n, in this instance, being the Number of columns N minus one, i.e. N-1.

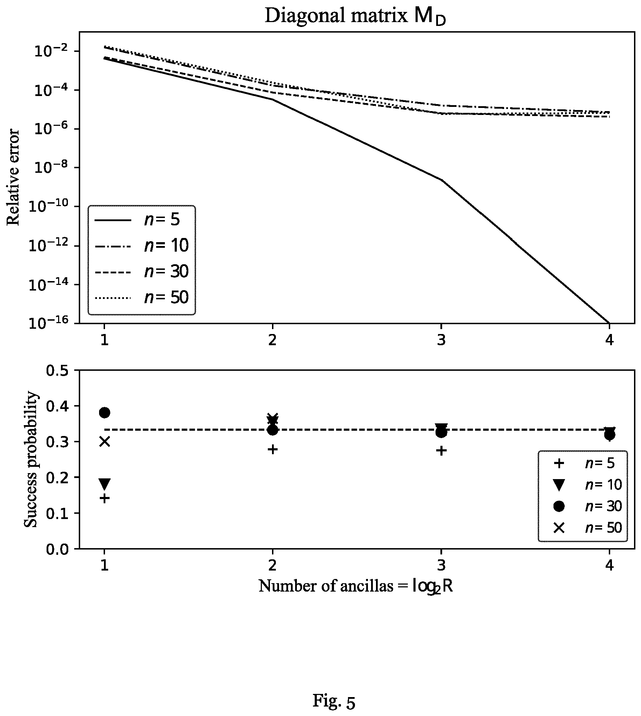

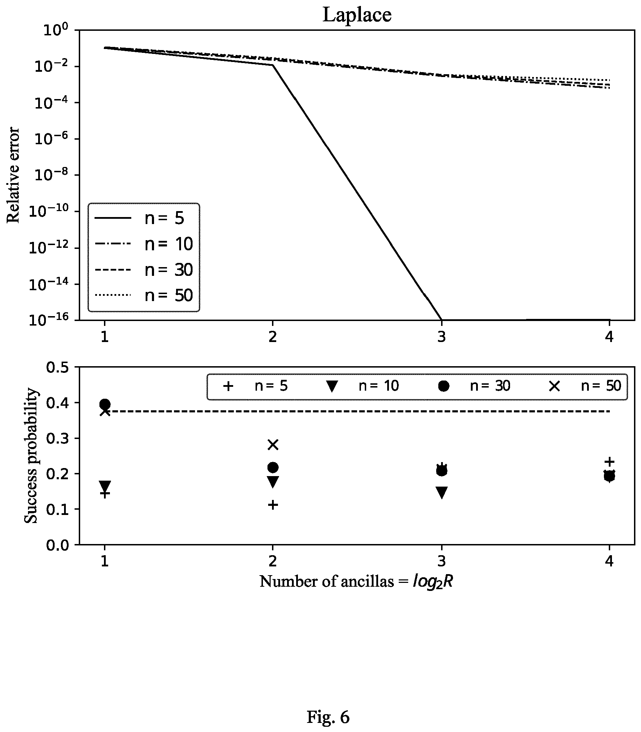

Figs. 5 and 6 illustrate results obtained from applying the algorithm discussed in conjunction with Figs. 2 and 4 to the diagonal matrix $M_D$ and the Laplace matric $M_L$ of Eq. (1), respectively. For any $n>1$, the MPO forms of $M_D$ and $M_L$ matrices have ranks r equal to 2 and 3, respectively.

The upper graph illustrates the minimum achieved error in the approximation of the diagonal (Fig: 5) and Laplace (Fig. 6) matrices by the orthogonal approximation 30 as a function of the approximation rank *R* (in terms of the number of used ancilla qubits 42 equal to $\log_2 R$) for 4 different sizes of the matrix 24 (in the graph legend, n is the number of qubits). The lower graph illustrates the corresponding average success probabilities based on the ancilla qubit measurements 44. The dotted lines represent values of $||M||^2 \lambda_{max}^{-2}(M)\, 2^{-n}$ (see Eq. (9)), which for both matrices are independent of n for large numbers n of qubits.

For both matrices, the method is able to achieve reasonable accuracy (errors about 0.01% and 0.5% for $M_D$ and $M_L$, respectively) and a sufficient success probability (more than 5%) up to 50 qubits, which is not a limitation for the method. An important property found in the experiments is that the error and the success probability almost do not depend on the number of qubits, such that the method is likely to scale well for more complex tasks.

For assessing the efficiency of the computation, the algorithm can be considered to consist of essentially three steps, i.e. finding an orthogonal approximation 30, extending the boundary cores 32a, 32b to allow a reshape into unitary matrices, and decomposing the resulting $2R*2R$ unitary matrices into a sequence of one- and two-qubit gates.

The time required for the last step is determined by the decomposition method used, and will not be discussed here. Moreover, in the example, the extension step is skipped and, based on an initial guess for an orthogonal approximation 30, instead of optimizing the kernels $V_1$ and $V_n$ themselves, the extended sub-tensors 32 corresponding to $U_1$ and $U_n$ are directly optimized in the iterative optimization algorithm.

Thus, the complexity of the algorithm for determining the quantum circuit 28 may be mainly determined by the complexity of the iterative optimization process. The execution time of the optimization procedure is generally proportional to the number of iterations and the execution time of each iteration. The number of iterations required for the optimization algorithm to converge may depend on several factors, including the required accuracy, the number of optimization parameters, the chosen learning rate, and the optimization starting point. Therefore, it may be difficult to determine a sufficient number of iterations in advance, and in the following the focus will be on the complexity of one iteration of the optimization procedure consisting of the following elements:

Element 1: The calculation of the normalized constant c may have a computational complexity scaling of $O(nR^3)$, based on the computational complexity of multiplying while simultaneously taking the trace of two MPOs with ranks $r_1$ and $r_2$ having a computational complexity of $O(n\, r_1 r_2 \max(r_1, r_2))$$.

Element 2: The computation of the cost function may have a computational complexity of $O(n(r+R)^3)$. After summation of two MPOs, their ranks are added, and the resulting $r_1+r_2$ rank MPO is then contracted with its complex conjugate, which has a computational complexity of $O(n(r_1+r_2)^3)$.

Element 3: The evaluation of the derivatives of the cost function using automatic differentiation. When using automatic differentiation, its algorithmic complexity is theoretically guaranteed to be no greater than the algorithmic complexity of the original program, which is equivalent to the preceding element (2) and equals $O(n\, R^3)$.

Element 4: The optimization process includes a Riemannian optimization step, which may involve the calculation of Riemannian gradients, retractions, and vector transports for each $V_k$. For $2R*2R$ matrices, the first and third steps of the Riemannian optimization step have a computational complexity scaling as $O(R^3)$. The complexity of the second step depends on the chosen retraction method. In an example implementation, the SVD retraction may be employed, which also has a complexity of $O(R^3)$ for $2R*2R$ matrices. Therefore, the Riemannian optimization step of each iteration may have a scaling of $O(n\, R^3)$.

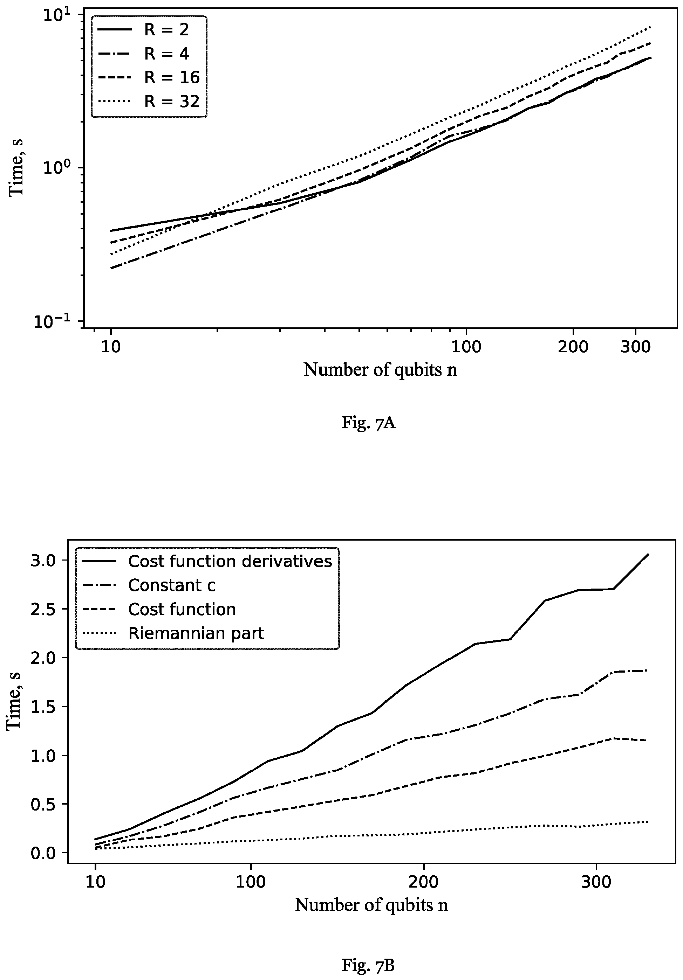

Fig. 7A, 7B illustrate experimental runtime results from implementing the method discussed in conjunction with Figs. 2 and 4 for determining a quantum circuit 28 when approximating the Diagonal matrix $M_D$ of Eq. (10) according to an example.

Fig. 7A illustrates the execution time of one iteration of the iterative optimization algorithm for different approximation ranks R of the orthogonal approximation 30 as a function of the number of qubits n, which depends on the size of the matrix 24.

Fig. 7B illustrates the experimentally determined execution times of each iteration and its elements (1)-(4) (as discussed in the section above) as a function of the qubit count n.

Fully complying with the theoretical estimate of the algorithm's complexity, these run-times depend polynomially on the number of qubits n and hence polylogarithmically on the target matrix size $N=2^n$ of the matrix 24.

Thus, the method for determining a quantum circuit 28 promises to provide an efficient algorithm for determining quantum gate decompositions for matrices in quantum computing applications. It is noted that the depth of the quantum circuit 28 only scales linearly with the qubit number n and therefore logarithmically with matrix size of the matrix 24.

The algorithm may leverage the relative strengths of quantum and classical hardware for generating an optimal algorithm for a given computation. Specifically, the orthogonal approximation 30 may be efficiently optimized on classical hardware with respect to a tensor network representation/approximation 22 of the matrix 24, even if the matrix 24 is large. At the same time, the resulting orthogonal approximation composed of compact sub-operations may be efficiently implemented on quantum hardware with a circuit depth, which may only scale linearly with qubit number.

Moreover, the orthogonal approximation 30 encoded as a quantum circuit 28 implements a quantum operation, which can be applied to an initial quantum state multiple times, for implementing a higher order of the approximated MPO representation 22, such as to find the largest eigenvalue of a matrix approximating a function by measuring the output state of the state after the higher order of the approximated MPO representation 22 has acted on the input state.

The task of finding the eigenvalue of a diagonalizable matrix can be considered as a search for the maximum element in the tensor (tensor of values on the matrix diagonal), so the power method can be applied to almost any optimization problem after a corresponding preprocessing, wherein a function representation is processed to obtain an MPS/MPO approximation.

Let f(x) represent some real valued function we wish to maximize/optimize over an input domain, $x \in [a, b]$. Given access to n qubits, one can exploit $2^n$ discretization points to represent f(x) as a quantum state,

$$|f\rangle = \frac{1}{\sqrt{N}} \sum_{k=1}^{2^n} f(x_k) |k\rangle \, ,$$

$$x_k = \left( a + (k-1) \frac{b-a}{2^n} \right), \{|k\rangle\}_{k=1}^{2^n} \tag{11}$$

wherein |k> are the computational basis states for n qubits, the normalization forcing $|\langle f|f\rangle|^2 = 1$. One can see that the

problem of maximization becomes,

$$\max_k f(x_k) \equiv \max_k p_k, \tag{12}$$

where $p_k = |\langle k|f\rangle|^2$ are the measurement probabilities of state $|f\rangle$ with respect to projections onto the computational basis. Therefore, if one could prepare such a state, measuring it would allow for recovering an approximate optimum of f(x)-upto errors caused in discretization. Power iteration can improve on this idea. Considering a diagonal matrix with the function values as diagonal elements

$$\mathrm{H} = \sum_{k=1}^{2^n} f(x_k)\, |k\rangle\langle k| \tag{13}$$

a power iteration follows:

$$\left| f^{(j+1)} \right\rangle = \frac{\mathrm{H}^j\, |f\rangle}{||\mathrm{H}^j\, |f\rangle||} \tag{14}$$

where ||.|| is the 2-norm. Ideally, as $j \dashrightarrow \infty$, the resultant state becomes $|k^*\rangle$, $k^* = \arg\max_k p_k$, thus recovering the optimum. In order to practically realize this simple approach on a quantum computer, one can use a quantum method to realize the power iterations as in Eq. (13), in the following also referred to as "quantum power method".

In a classical computer, the multiplication of matrices with large dimensions can be computationally expensive. However, with a quantum computer, the size of the matrices can be exponentially compressed due to the larger computational state space, such that this method can be feasible for optimization approaches.

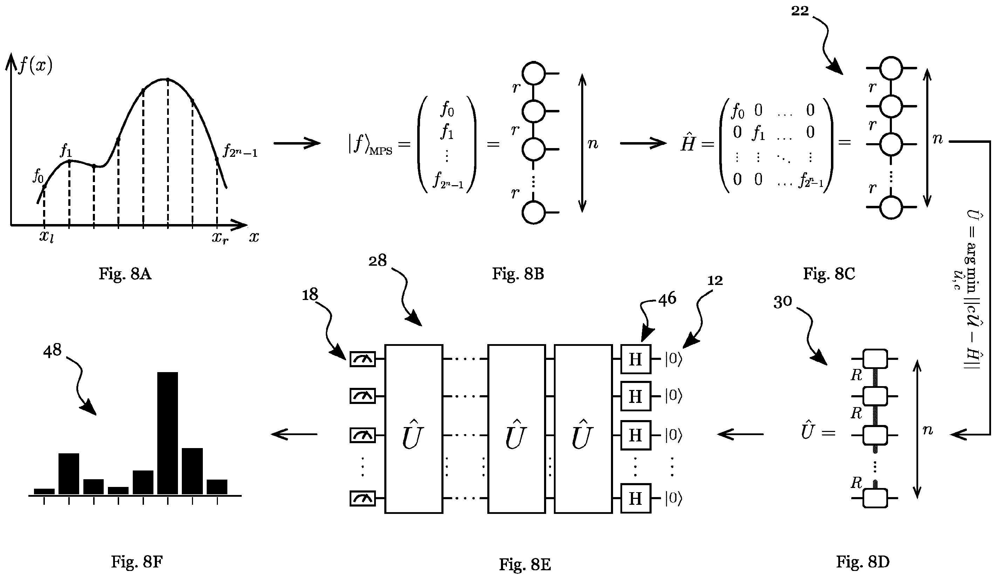

Figs. 8A-F illustrate a schematic flow chart for determining a quantum computer implementation for an algorithm of finding the largest eigenvalue of a matrix approximating a function according to an example.

In a first step illustrated in figure 8A, function values $f_0, ..., f_{2^n-1}$ for corresponding input values $x_l$, $x_r$ of the function f(x) are determined, which may generally be a black box function. In the illustrated example, the function values are sampled from a smooth curve according to equidistant x values.

Based on the function values, an MPS-state is determined according to a suitable algorithm, e.g. based on a repeated truncated SVD procedure or cross-approximation. As shown in Fig. 8B, the function values of the equidistantly sampled function may form a function value vector, on which basis the values of the MPS state vector may be determined. The MPS state may represent the $2^n$ values of the function value vector with at most $2nr^2$ elements.

However, the MPS approximation cannot be directly used in the classical algorithm for implementing the power method, as the ranks of the MPS would grow exponentially with the powers of the power method. Thus, a naive classical realization of the power method quickly becomes out of scope due to MPS ranks scaling exponentially with iterations.

Nonetheless, based on the MPS representation of the function, which may approximate the function based on the discretized function values, (or the function itself) an approximated MPO representation 22 of the function may be obtained as schematically illustrated in Fig. 8C.

Using the optimization discussed in conjunction with Figs. 2-4 above, an (already extended) orthogonal approximation 30 of the approximated MPO representation 22 may subsequently be obtained, as indicated in Figs. 8C, 8D.

For the orthogonal approximation 30 shown in Fig. 8D, a corresponding quantum circuit 28 is determined, which can be composed of unitary operators 40 for each of the isometric sub-tensors 32 obtained through the optimization algorithm.

For the implementation of the quantum power algorithm, the quantum circuit 28 acts on an input state of the qubits in the qubit register 12 multiple times, as shown in the schematic example of Fig. 8E.

The input state of the qubits may be obtained based on a state initialization quantum circuit 46, which may comprise an application of Hadamard gates to each of the qubits starting in the |0> ground state, thereby initializing a "vector of ones" in the computational basis spanned by the qubits. Then the quantum circuit 28 acts multiple times on the qubits to obtain a final outcome state, which can be measured using detectors of a measurement module 18. By repeating the quantum circuit 28, quantum power iterations can be realized.

As schematically shown in Fig. 8F, the resulting outcome 48 is measured (e.g. multiple times) to obtain an output of the quantum power algorithm in the form of the largest eigenvalue of the effective matrix implemented by the quantum circuit 28 on the basis of the orthogonal approximation 30.

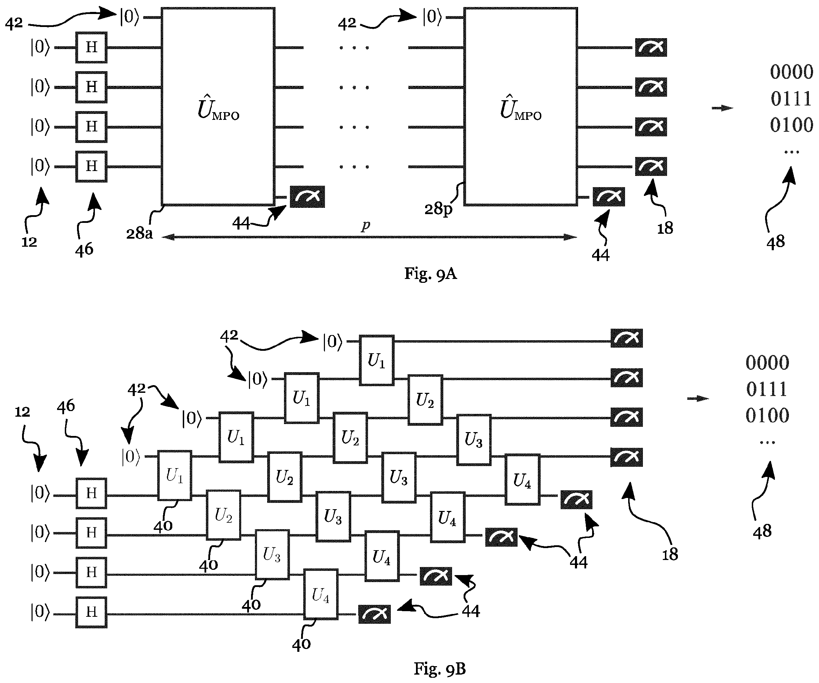

As shown in greater detail in the example of Fig. 9A, for each power p of the power method, the algorithm

implementation comprises one quantum circuit 28a-28p, which are sequentially applied to the qubits. Furthermore, for each of the quantum circuits 28a-28p, corresponding ancilla qubits 42 are initialized and introduced. In the illustration, a single |0> state is shown, but the skilled person will appreciate that for each of the quantum circuits 28a-28p, log (R) ancilla qubits 42 may be prepared, as discussed above.

In some examples, the measured qubits 44 for each of the quantum circuits 28a-28p may be re-initialized and used as ancilla qubits 42 of subsequent quantum circuits 28a-28p, in case a sufficiently fast measurement and initialization technique may be available. In other examples, new ancilla qubits 42 are added for each of the quantum circuits 28a-28p.

The algorithmic procedure in realizing the quantum power method can be implemented as follows (diagrammatically represented in Fig. 9A):

1. Prepare the initial state: $|+\rangle^{\otimes n} \otimes |0\rangle^{\otimes na}$, wherein n may be the number of computation qubits and na is the number of ancilla qubits (e.g. log (R)). In the example, $|f\rangle_{MPS}$ is not prepared as an initial state, as it can be easier to prepare a unit vector ($|+\rangle^{\otimes n}$).

2. Apply the quantum circuit 28, $U_{MPO}$, which is decomposed into the quantum operations 40, $U_k$, according to the isometric sub-tensors 32 of the extended orthogonal approximation 30.

3. Sequentially append the quantum circuit 28 with respect to the addition of a new ancilla space initialized as: $|0\rangle^{\otimes na}$, until the required power, p is attained.

4. Measure all ancilla qubits 44 in the computational basis.

5. If the measurement outcomes of measuring the ancilla qubits 44 correspond to the bitstring $0^{x(p \cdot na)}$ (successful outcome), record the measurement state of the remaining main qubits with a detection module 18 and recover bit-strings corresponding to a candidate optima. In case of an unsuccessful outcome, return to step 1.

6. Repeat steps 1-4 to collect measurement statistics and infer the candidate optima as the most-likely outcome.

Due to post selection on the ancilla space, the algorithmic success may depend on the post selection probabilities, which can be shown to be independent of the number of computation qubits (n), and may be proportional to the power of the power method according to 1/p. Accounting for all the steps, the run-time for the quantum approach may be given by $t \propto n \times R^2 \times p$. The complexity is only linear in *p*, rather than exponential as for the classical (tensor network) implementation of the power method. Thus, in this case, the quantum approach can provide an exponential run-time advantage.

As shown in Fig. 9B, the quantum circuit for implementing the quantum power method may be efficiently compressed by executing some of the quantum operations of the quantum circuits 28a-28p in parallel.

In the example, four quantum circuits 28 are concatenated, each comprising four quantum operations 40, $U_1$-$U_4$, based on corresponding isometric sub-tensors 32 of the orthogonal approximation. However, the second quantum operation 40, $U_2$, of the first quantum circuit 28a may be executed in parallel to the first quantum operation 40, $U_1$, of the second quantum circuit 28b. Thus, the run-time of the entire quantum operation 28a-28d may be smaller than the sum of the runtimes of the individual constituent quantum circuits 28a-28d.

In some examples, for each power of the quantum power method, the run-time of the algorithm on a quantum computer may increase by the run-time of one quantum operation 40 corresponding to the last isometric sub-tensor 32b of the orthogonal approximation 30.

In some examples, a first output of a first quantum operation 40 of a first quantum circuit 28a in the concatenated sequence of quantum circuits 28a-28p is a second input for a first quantum operation 40 of a second subsequent quantum circuit 28b of the concatenated sequence of quantum circuits 28a-28p, and a second output of the first quantum operation 40 of the first quantum circuit 28 is a first input of a second quantum operation 40 of the second circuit 28b. In some examples, a first output of a second quantum operation 40 of the first quantum circuit 28a in the concatenated sequence of quantum circuits 28a-28p is a second input for a second quantum operation 40 of the second subsequent quantum circuit 28b, and a second output of the first quantum operation 40 of the second quantum circuit 28 is a first input of the second quantum operation 40 of the second circuit 28b, as shown in Fig. 9B.

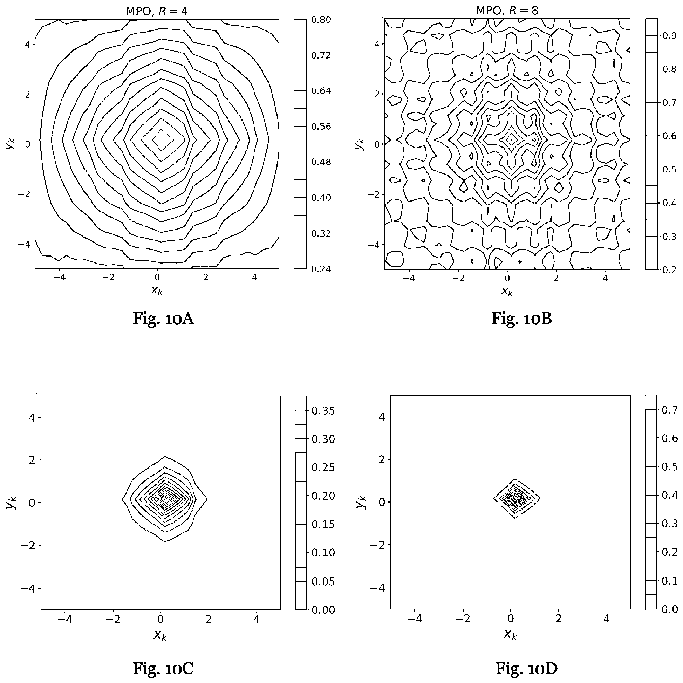

Fig. 10A-D illustrate examples of measurement probabilities obtained for quantum circuit encodings and a simulated quantum power method of a two-dimensional Ackley function as contour plots, with the highest probabilities being in the center of the respective graph.

Fig. 10A and 10B illustrate the measurement probabilities for measuring a certain state for the Ackley function implemented with an orthogonal approximation 30 with rank R=8 and R=4, respectively. Figs. 10C and 10D illustrate higher powers of the orthogonal approximation 30 of rank R=4 implemented as quantum circuits 28 on a simulated

quantum computer, wherein Figs. 10C and 10D show examples of a power iteration of p=10 and p=25, respectively.

The 2-dimensional Ackley function is defined as:

$$f(x,y) = 20 + e - \left[20\exp\left(-0.2\sqrt{0.5\left(x^2+y^2\right)}\right) + \exp\left(0.5\left(\cos 2\pi x + \cos 2\pi y\right)\right)\right] \quad (15)$$

The domain x, y ∈ [-5, 5] is considered, where the function attains a global minimum, f (0, 0) = 0. Finding this global minimum is a well-known non-convex optimization problem which poses difficulty for gradient based optimizers. As such, the function is commonly used to benchmark optimization algorithms. Here quantum power iteration as a method to find the global minimum is considered. To do this the minimization problem is first converted into a maximation by the standard technique of inversion. Specifically, g (x, y) = 1 - tanh (κ f(x, y)).

Note that for an appropriate choice of κ, minimization of Ackley function as in Eq. (15) is equivalent to maximizing g (x, y). This modified function g (x, y) will be called the Ackley function in the following for the sake of simplicity. In the examples, a total of n = 10 computation qubits are used (5 qubits per dimension) for domain discretization and an MPS representation is obtained based on the discretized values with maximal ranks r = 6, using the cross-approximation method in TTPy to obtain the MPS cores. From the MPS cores, the diagonal MPO, H, as an approximated MPO representation 22 of the function is obtained in a straightforward manner through known algorithms.

Next an orthogonal approximation 30 of the approximated MPO representation 22, U*, is obtained by minimizing the cost function as in Eq. (4). The algorithm is used to search for isometric MPO cores 32, i.e. isometric sub-tensors 32, with an approximation rank R = 8 and R=4, and it is observed that Eq. (4) can indeed be minimized by Riemannian gradient descent with a learning rate of 0.02 and a total of 10000 iterations.

Although the orthogonal approximation 30, U*, with approximation rank R=8 can be cast into a Qiskit quantum circuit, it requires a compilation step to decompose 4-qubit operations into a sequence of two- and single- qubit gates. The resultant circuit depth therefore becomes comparatively large. To reduce the simulation time on a classical computer, a minimization of Eq. (11) with approximation rank R = 4 is performed. In this case, a convergence cannot be guaranteed, however such an approach is still motivated from the fact that power method finds the maximal values as prescribed by Eq. (14). Although minimization of Eq. (4) may admit large errors due to approximation rank deficiency, if the maximum is resolved accurately, then the orthogonal approximation 30, U*, can still be used for power iterations.

In Fig. 10A and 10B, orthogonal approximations 30 for the Ackley function with different ranks R=4 and R=8, respectively, are compared and the following is observed: 1) the approximation rank R = 8 orthogonal approximation 30 qualitatively recovers the exact function and 2) the approximation rank R = 4 orthogonal approximation resolves the optimum of the exact function.

The R = 4 orthogonal MPO is cast into a Qiskit quantum circuit and powers of up to 25 are realized (cf. Figs. 10C, D). The results in Figs. 10C, 10D illustrate that the quantum power method indeed converges to the optima of the Ackley function at (0, 0).

Thus, low-rank tensor-network approximations 22 of some given function can be prepared and used to obtain an orthogonal approximation 30 through a variational optimization algorithm executed on a classical computer, which can be cast into a quantum circuit 28 composed of multiple shallow quantum operations with smaller qubit numbers and using ancilla qubits 42, 44. Power iterations can be achieved by a repeated concatenation of such quantum circuit blocks 28a-28p. The linear scaling of the quantum power method with the powers p indicates that the quantum algorithm could be efficiently employed on near term quantum hardware for solving optimization problems which are difficult on classical hardware.

In the preceding discussion, reference is primarily made to a function of which extremal values are searched. However, the skilled person will appreciate that the function may be provided in matrix form, and the method may therefore effectively search for the highest eigenvalue of a matrix as the function. On the other hand, although the illustrated examples pertain to an equidistant sampling of a function, based on known interpolation and approximation algorithms, such as cross approximation, an MPO/MPS representation of the function may be obtained for any distribution of function values, and may be used as part of the method in Fig. 2 as an approximated MPO representation 22 of the function.

Further, the skilled person will appreciate that although the illustrated examples show that the qubits measured for determining the outcome 48 are different from the computation qubits originally prepared in the |+> state, in some examples, the same qubits which are prepared in the |+> state are also measured for determining the outcome 48, e.g. through the use of additional gates, e.g. SWAP gates, for swapping the quantum states of the qubits.

The description of the preferred embodiments and the figures merely serve to illustrate the invention and the beneficial effects associated therewith, but should not be understood to imply any limitation. The scope of the invention is to be determined solely by the appended claims.

LIST OF REFERENCE SIGNS

| | |
|---|---|
| 10 | system |
| 12 | qubit register |
| 14 | state preparation module |
| 16 | quantum matrix multiplication module |
| 18 | measurement module |
| 20 | processing system |
| 22 | MPO approximation |
| 24 | matrix representation of the function |
| 24a | Penrose diagram representation of the matrix |
| 26 | sub-tensor |
| 28 | quantum circuit |
| 30 | orthogonal approximation |
| 32, 32a, 32b | isometric sub-tensors |
| 34 | extended orthogonal approximation |
| 36, 38 | \|0> states for border cores |
| 40 | quantum operations |
| 42 | ancilla qubits |
| 44 | measured ancilla qubits |
| 46 | state initialization quantum circuit |
| 48 | outcome |

## Claims

**1.** A computer-implemented method for determining a quantum encoding of an arbitrary power of an approximation of a function (24, 24a) to be implemented on quantum hardware, said method comprising the steps of:

obtaining an approximation of the function (24, 24a) in the form of an approximated matrix product operator, MPO, representation (22) of the function (24, 24a);
selecting an approximation rank based on the approximated MPO representation (22);
determining a rank-based orthogonal approximation (30, 34) of the approximated MPO representation (22) in the form of an orthogonal MPO with isometric sub-tensors (32, 32a, 32b) of the approximation rank, comprising:

determining an initial guess for the orthogonal approximation (30, 34) with isometric sub-tensors (32, 32a, 32b) of the approximation rank;
starting with the initial guess, iteratively optimizing the orthogonal approximation (30, 34) based on an optimization algorithm minimizing a cost function subject to isometry constraints for the isometric sub-tensors (32, 32a, 32b), wherein the cost function attributes a cost to the orthogonal approximation (30, 34) based on a quality of the orthogonal approximation (30, 34) with respect to the approximated MPO representation (22);

encoding the orthogonal approximation (30, 34) into a quantum circuit (28, 28a-p) based on encodings of the isometric sub-tensors (32, 32a, 32b) into quantum gates acting on computation qubits and an initialized set of ancilla qubits (42); and
encoding an arbitrary power of the orthogonal approximation (30, 34) based on applying the quantum circuit (28, 28a-p) multiple times in a concatenated sequence of quantum circuits (28, 28a-p) to an input quantum state.

**2.** The method of claim 1, wherein the approximated MPO representation (22) is an approximate tensor network representation of the function (24, 24a), wherein the method in particular comprises obtaining a series of sub-tensors (26) via a cross approximation of the function (24, 24a).

**3.** The method of any one of the preceding claims, wherein the method further comprises obtaining the approximated MPO representation (22) based on a plurality of sample values of the function (24, 24a) for a corresponding plurality of different input values.

**4.** The method of any one of the preceding claims, wherein obtaining the approximated MPO representation (22)

comprises obtaining a matrix product state, MPS, representation of the function (24, 24a) by cross-approximation techniques and obtaining the approximated MPO representation (22) based on the MPS representation by enforcing a diagonal restriction.

**5.** The method of any one of the preceding claims, wherein applying the quantum circuit (28, 28a-p) multiple times in a concatenated sequence of quantum circuits (28, 28a-p) comprises preparing a number of sets of ancilla qubits (42) in an initial state, wherein the number is at least equal to a number of times the quantum circuit (28, 28a-p) is applied, wherein each set of ancilla qubits (42) in particular comprises a number of qubits equal to the logarithm of the approximation rank.

**6.** The method of claim 5, wherein a subsequent quantum circuit (28a-p) in the concatenated sequence of quantum circuits (28, 28a-p) acts on a respective set of ancilla qubits (42) and a set of computation qubits on which the previous quantum circuit has acted.

**7.** The method of any one of the preceding claims, wherein for each time the quantum circuit (28, 28a-p) is applied, the method comprises measuring a set of post-selection qubits (44) on which the respective quantum circuit (28, 28a-p) has acted, and which are not acted on by subsequent applications of the quantum circuits (28, 28a-p) in the concatenated sequence of quantum circuits (28, 28a-p),
wherein each set of post-selection qubits (44) in particular comprises a number of qubits equal to the logarithm of the approximation rank.

**8.** The method of any one of the preceding claims, wherein preparing the initial quantum state comprises applying a Hadamard gate to each qubit of a set of initial computation qubits.

**9.** The method of any one of the preceding claims, wherein applying the quantum circuit (28, 28a-p) p times in a concatenated sequence of quantum circuits (28, 28a-p) to an input quantum state comprises preparing p sets of ancilla qubits (42), wherein each set of ancilla qubits (42) is acted upon by a respective one of the quantum circuits (28, 28a-p) and comprises a number of ancilla qubits (42) equal to the logarithm of the approximation rank.

**10.** A processing system (20) for determining a quantum encoding of an arbitrary power of an approximation of a function (24, 24a) to be implemented on quantum hardware, wherein said system (10) is configured to:

obtain an approximation of the function (24, 24a) in the form of an approximated matrix product operator, MPO, representation (22) of the function (24, 24a);
selecting an approximation rank based on the approximated MPO representation (22);
determine a rank-based orthogonal approximation (30, 34) of the approximated MPO representation (22) in the form of an orthogonal MPO with isometric sub-tensors (32, 32a, 32b) of the approximation rank, wherein the system (10) is configured to:

determine an initial guess for an orthogonal approximation (30, 34) of the function (24, 24a) in the form of a tensor network with isometric sub-tensors (32, 32a, 32b) of the approximation rank;
starting with the initial guess, iteratively optimize the orthogonal approximation (30, 34) based on an optimization algorithm minimizing a cost function subject to isometry constraints for the isometric sub-tensors (32, 32a, 32b), wherein the cost function attributes a cost to the orthogonal approximation (30, 34) based on a quality of the orthogonal approximation (30, 34) with respect to the approximated MPO representation (22);

determine an implementation of an arbitrary power of the orthogonal approximation (30, 34) in a quantum circuit (28, 28a-p) based on encodings of the isometric sub-tensors (32, 32a, 32b) into quantum gates acting on computation qubits and an initialized set of ancilla qubits (42), wherein in the implementation, the quantum circuit (28, 28a-p) is applied multiple times in a concatenated sequence of quantum circuits (28, 28a-p) to an input quantum state.

**11.** The system (10) of claim 10, wherein the system (10) is further configured to communicate the implementation to a quantum computing system for executing the implementation on quantum hardware.

**12.** Hybrid quantum-classical computing system comprising a system (10) of claim 10 or 11 and quantum computing hardware, wherein the hybrid quantum-classical computing system is configured to

receive the implementation from the processing system (20),
implement the implementation in the quantum computing hardware, and
receive a calculation result from the quantum computing hardware.

**13.** A non-transitory medium comprising machine-readable instructions, which, when executed by a processing system (20), implement a method according to any one of claims 1 to 9 and/or a system according to any one of claims 10 to 12.

## Patentansprüche

**1.** Computerimplementiertes Verfahren zum Bestimmen einer Quantencodierung einer beliebigen Potenz einer Näherung einer Funktion (24, 24a), die auf Quantenhardware zu implementieren ist, wobei das Verfahren die folgenden Schritte umfasst:

Erhalten einer Approximation der Funktion (24, 24a) in der Form einer genäherten Matrixproduktoperator-, MPO-, Darstellung (22) der Funktion (24, 24a);
Auswählen eines Approximationsrangs basierend auf der genäherten MPO-Darstellung (22);
Bestimmen einer rangbasierten orthogonalen Approximation (30, 34) der genäherten MPO-Darstellung (22) in der Form einer orthogonalen MPO mit isometrischen Subtensoren (32, 32a, 32b) des Approximationsrangs, umfassend:

Bestimmen einer Anfangsschätzung für die orthogonale Approximation (30, 34) mit isometrischen Subtensoren (32, 32a, 32b) des Approximationsrangs;
beginnend mit der Anfangsschätzung, iteratives Optimieren der orthogonalen Approximation (30, 34) basierend auf einem Optimierungsalgorithmus, der eine Kostenfunktion minimiert, die Isometriebedingungen für die isometrischen Subtensoren (32, 32a, 32b) unterliegt, wobei die Kostenfunktion der orthogonalen Approximation (30, 34) Kosten basierend auf einer Qualität der orthogonalen Approximation (30, 34) in Bezug auf die genäherte MPO-Darstellung (22) zuordnet;

Codieren der orthogonalen Approximation (30, 34) in eine Quantenschaltung (28, 28a-p) basierend auf Codierungen der isometrischen Subtensoren (32, 32a, 32b) in Quantengatter, die auf Berechnungsqubits und einen initialisierten Satz von Hilfsqubits (42) wirken; und
Codieren einer beliebigen Potenz der orthogonalen Approximation (30, 34) basierend auf dem mehrmaligen Anwenden der Quantenschaltung (28, 28a-p) in einer verketteten Sequenz von Quantenschaltungen (28, 28a-p) auf einen Eingangsquantenzustand.

**2.** Verfahren nach Anspruch 1, wobei die genäherte MPO-Darstellung (22) eine genäherte Tensornetzwerkdarstellung der Funktion (24, 24a) ist, wobei das Verfahren insbesondere das Erhalten einer Reihe von Subtensoren (26) über eine Cross-Approximation der Funktion (24, 24a) umfasst.

**3.** Verfahren nach einem der vorhergehenden Ansprüche, wobei das Verfahren ferner das Erhalten der genäherten MPO-Darstellung (22) basierend auf einer Vielzahl von Abtastwerten der Funktion (24, 24a) für eine entsprechende Vielzahl von verschiedenen Eingangswerten umfasst.

**4.** Verfahren nach einem der vorhergehenden Ansprüche, wobei das Erhalten der genäherten MPO-Darstellung (22) das Erhalten einer Matrixproduktzustands-, MPS-, Darstellung der Funktion (24, 24a) durch Cross-Approximationstechniken und das Erhalten der genäherten MPO-Darstellung (22) basierend auf der MPS-Darstellung durch Erzwingen einer diagonalen Bedingung umfasst.

**5.** Verfahren nach einem der vorhergehenden Ansprüche, wobei das mehrmalige Anwenden der Quantenschaltung (28, 28a-p) in einer verketteten Sequenz von Quantenschaltungen (28, 28a-p) das Vorbereiten einer Anzahl von Sätzen von Hilfsqubits (42) in einem Anfangszustand umfasst, wobei die Anzahl mindestens gleich einer Anzahl von Malen ist, die die Quantenschaltung (28, 28a-p) angewendet wird,
wobei jeder Satz von Hilfsqubits (42) insbesondere eine Anzahl von Qubits umfasst, die gleich dem Logarithmus des Approximationsrangs ist.

**6.** Verfahren nach Anspruch 5, wobei eine nachfolgende Quantenschaltung (28a-p) in der verketteten Sequenz von Quantenschaltungen (28, 28a-p) auf einen jeweiligen Satz von Hilfsqubits (42) und einen Satz von Berechnungs-

qubits wirkt, auf die die vorhergehende Quantenschaltung gewirkt hat.

7. Verfahren nach einem der vorhergehenden Ansprüche, wobei das Verfahren für jedes Mal, das die Quantenschaltung (28, 28a-p) angewendet wird, das Messen eines Satzes von Postselektions-Qubits (44) umfasst, auf die die jeweilige Quantenschaltung (28, 28a-p) gewirkt hat und auf die durch nachfolgende Anwendungen der Quantenschaltungen (28, 28a-p) in der verketteten Sequenz von Quantenschaltungen (28, 28a-p) nicht gewirkt wird,
wobei jeder Satz von Postselektions-Qubits (44) insbesondere eine Anzahl von Qubits umfasst, die gleich dem Logarithmus des Approximationsrangs ist.

8. Verfahren nach einem der vorhergehenden Ansprüche, wobei das Vorbereiten des Anfangsquantenzustands das Anwenden eines Hadamard-Gatters auf jedes Qubit eines Satzes von initialen Berechnungsqubits umfasst.

9. Verfahren nach einem der vorhergehenden Ansprüche, wobei das p-malige Anwenden der Quantenschaltung (28, 28a-p) in einer verketteten Sequenz von Quantenschaltungen (28, 28a-p) auf einen Eingangsquantenzustand das Vorbereiten von p Sätzen von Hilfsqubits (42) umfasst, wobei auf jeden Satz von Hilfsqubits (42) durch eine jeweilige der Quantenschaltungen (28, 28a-p) gewirkt wird und eine Anzahl von Hilfsqubits (42) umfasst, die gleich dem Logarithmus des Approximationsrangs ist.

10. Verarbeitungssystem (20) zum Bestimmen einer Quantencodierung einer beliebigen Potenz einer Näherung einer Funktion (24, 24a), die auf Quantenhardware zu implementieren ist, wobei das System (10) eingerichtet ist zum:

Erhalten einer Approximation der Funktion (24, 24a) in der Form einer genäherten Matrixproduktoperator-, MPO-, Darstellung (22) der Funktion (24, 24a);
Auswählen eines Approximationsrangs basierend auf der genäherten MPO-Darstellung (22);
Bestimmen einer rangbasierten orthogonalen Approximation (30, 34) der genäherten MPO-Darstellung (22) in der Form einer orthogonalen MPO mit isometrischen Subtensoren (32, 32a, 32b) des Approximationsrangs, wobei das System (10) eingerichtet ist zum:

Bestimmen einer Anfangsschätzung für eine orthogonale Approximation (30, 34) der Funktion (24, 24a) in der Form eines Tensornetzwerks mit isometrischen Subtensoren (32, 32a, 32b) des Approximationsrangs;
beginnend mit der Anfangsschätzung, iteratives Optimieren der orthogonalen Approximation (30, 34) basierend auf einem Optimierungsalgorithmus, der eine Kostenfunktion minimiert, die Isometriebedingungen für die isometrischen Subtensoren (32, 32a, 32b) unterliegt, wobei die Kostenfunktion der orthogonalen Approximation (30, 34) Kosten basierend auf einer Qualität der orthogonalen Approximation (30, 34) in Bezug auf die genäherte MPO-Darstellung (22) zuordnet;

Bestimmen einer Implementierung einer beliebigen Potenz der orthogonalen Approximation (30, 34) in einer Quantenschaltung (28, 28a-p) basierend auf Codierungen der isometrischen Subtensoren (32, 32a, 32b) in Quantengatter, die auf Berechnungsqubits und einen initialisierten Satz von Hilfsqubits (42) wirken, wobei in der Implementierung die Quantenschaltung (28, 28a-p) mehrmals in einer verketteten Sequenz von Quantenschaltungen (28, 28a-p) auf einen Eingangsquantenzustand angewendet wird.

11. System (10) nach Anspruch 10, wobei das System (10) ferner eingerichtet ist zum Kommunizieren der Implementierung an ein Quantenrechensystem zum Ausführen der Implementierung auf Quantenhardware.

12. Hybrides quantenklassisches Rechensystem, umfassend ein System (10) nach Anspruch 10 oder 11 und Quantenrechenhardware, wobei das hybride quantenklassische Rechensystem eingerichtet ist zum:

Empfangen der Implementierung von dem Verarbeitungssystem (20),
Implementieren der Implementierung in der Quantenrechenhardware, und
Empfangen eines Berechnungsergebnisses von der Quantenrechenhardware.

13. Nicht-transitorisches Medium, umfassend maschinenlesbare Anweisungen, die, wenn sie von einem Verarbeitungssystem (20) ausgeführt werden, ein Verfahren nach einem der Ansprüche 1 bis 9 und/oder ein System nach einem der Ansprüche 10 bis 12 implementieren.

## Revendications

1. Procédé mis en œuvre par ordinateur pour déterminer un codage quantique d'une puissance arbitraire d'une approximation d'une fonction (24, 24a) devant être mise en œuvre sur du matériel quantique, ledit procédé comprenant les étapes consistant à :

    obtenir une approximation de la fonction (24, 24a) sous la forme d'une représentation approximée d'opérateur produit de matrices (MPO) (22) de la fonction (24, 24a) ;
    sélectionner un rang d'approximation sur la base de la représentation approximée d'opérateur produit de matrices (MPO) (22) ;
    déterminer une approximation orthogonale basée sur le rang (30, 34) de la représentation approximée d'opérateur produit de matrices (MPO) (22) sous la forme d'un MPO orthogonal avec des sous-tenseurs isométriques (32, 32a, 32b) du rang d'approximation, comprenant :

        déterminer une estimation initiale pour l'approximation orthogonale (30, 34) avec des sous-tenseurs isométriques (32, 32a, 32b) du rang d'approximation ;
        en commençant par l'estimation initiale, optimiser de manière itérative l'approximation orthogonale (30, 34) sur la base d'un algorithme d'optimisation minimisant une fonction de coût sous contrainte d'isométrie pour les sous-tenseurs isométriques (32, 32a, 32b), laquelle fonction de coût attribue un coût à l'approximation orthogonale (30, 34) en fonction d'une qualité de l'approximation orthogonale (30, 34) par rapport à la représentation approximée d'opérateur produit de matrices (MPO) (22) ;

    coder l'approximation orthogonale (30, 34) dans un circuit quantique (28, 28a-p) sur la base de codages des sous-tenseurs isométriques (32, 32a, 32b) en portes quantiques agissant sur des qubits de calcul et un ensemble initialisé de qubits auxiliaires (42) ; et
    coder une puissance arbitraire de l'approximation orthogonale (30, 34) sur la base de l'application du circuit quantique (28, 28a-p) plusieurs fois dans une séquence concaténée de circuits quantiques (28, 28a-p) à un état quantique d'entrée.

2. Procédé selon la revendication 1, dans lequel la représentation approximée d'opérateur produit de matrices (MPO) (22) est une représentation approximée de réseau de tenseurs de la fonction (24, 24a), dans lequel le procédé comprend en particulier l'obtention d'une série de sous-tenseurs (26) via une approximation croisée de la fonction (24, 24a).

3. Procédé selon l'une quelconque des revendications précédentes, dans lequel le procédé comprend en outre l'obtention de la représentation approximée d'opérateur produit de matrices (MPO) (22) sur la base d'une pluralité de valeurs d'échantillon de la fonction (24, 24a) pour une pluralité correspondante de différentes valeurs d'entrée.

4. Procédé selon l'une quelconque des revendications précédentes, dans lequel l'obtention de la représentation approximée d'opérateur produit de matrices (MPO) (22) comprend l'obtention d'une représentation d'état produit de matrices (MPS) de la fonction (24, 24a) par des techniques d'approximation croisée et l'obtention de la représentation approximée d'opérateur produit de matrices (MPO) (22) sur la base de la représentation d'état produit de matrices (MPS) en imposant une restriction diagonale.

5. Procédé selon l'une quelconque des revendications précédentes, dans lequel l'application du circuit quantique (28, 28a-p) plusieurs fois dans une séquence concaténée de circuits quantiques (28, 28a-p) comprend la préparation d'un nombre d'ensembles de qubits auxiliaires (42) dans un état initial, ledit nombre étant au moins égal au nombre de fois que le circuit quantique (28, 28a-p) est appliqué,
chaque ensemble de qubits auxiliaires (42) comprenant en particulier un nombre de qubits égal au logarithme du rang d'approximation.

6. Procédé selon la revendication 5, dans lequel un circuit quantique ultérieur (28a-p) dans la séquence concaténée de circuits quantiques (28, 28a-p) agit sur un ensemble respectif de qubits auxiliaires (42) et un ensemble de qubits de calcul sur lequel le circuit quantique précédent a agi.

7. Procédé selon l'une quelconque des revendications précédentes, dans lequel, pour chaque fois que le circuit quantique (28, 28a-p) est appliqué, le procédé comprend la mesure d'un ensemble de qubits de post-sélection (44) sur lesquels le circuit quantique respectif (28, 28a-p) a agi, et qui ne sont pas soumis à l'action d'applications

ultérieures des circuits quantiques (28, 28a-p)
dans la séquence concaténée de circuits quantiques (28, 28a-p), chaque ensemble de qubits de post-sélection (44) comprenant en particulier un nombre de qubits égal au logarithme du rang d'approximation.

**8.** Procédé selon l'une quelconque des revendications précédentes, dans lequel la préparation de l'état quantique initial comprend l'application d'une porte de Hadamard à chaque qubit d'un ensemble initial de qubits de calcul.

**9.** Procédé selon l'une quelconque des revendications précédentes, dans lequel l'application du circuit quantique (28, 28a-p) p fois dans une séquence concaténée de circuits quantiques (28, 28a-p) à un état quantique d'entrée comprend la préparation de p ensembles de qubits auxiliaires (42), chaque ensemble de qubits auxiliaires (42) étant soumis à l'action d'un circuit quantique respectif (28, 28a-p) et comprenant un nombre de qubits auxiliaires (42) égal au logarithme du rang d'approximation.

**10.** Système de traitement (20) pour déterminer un codage quantique d'une puissance arbitraire d'une approximation d'une fonction (24, 24a) devant être mise en œuvre sur du matériel quantique, ledit système (10) étant configuré pour :

obtenir une approximation de la fonction (24, 24a) sous la forme d'une représentation approximée d'opérateur produit de matrices (MPO) (22) de la fonction (24, 24a) ;
sélectionner un rang d'approximation sur la base de la représentation approximée d'opérateur produit de matrices (MPO) (22) ;
déterminer une approximation orthogonale basée sur le rang (30, 34) de la représentation approximée d'opérateur produit de matrices (MPO) (22) sous la forme d'un MPO orthogonal avec des sous-tenseurs isométriques (32, 32a, 32b) du rang d'approximation, le système (10) étant configuré pour :

déterminer une estimation initiale pour une approximation orthogonale (30, 34) de la fonction (24, 24a) sous la forme d'un réseau de tenseurs avec des sous-tenseurs isométriques (32, 32a, 32b) du rang d'approximation ;
en commençant par l'estimation initiale, optimiser de manière itérative l'approximation orthogonale (30, 34) sur la base d'un algorithme d'optimisation minimisant une fonction de coût sous contrainte d'isométrie pour les sous-tenseurs isométriques (32, 32a, 32b), laquelle fonction de coût attribue un coût à l'approximation orthogonale (30, 34) en fonction d'une qualité de l'approximation orthogonale (30, 34) par rapport à la représentation approximée d'opérateur produit de matrices (MPO) (22) ;

déterminer une mise en œuvre d'une puissance arbitraire de l'approximation orthogonale (30, 34) dans un circuit quantique (28, 28a-p) sur la base de codages des sous-tenseurs isométriques (32, 32a, 32b) en portes quantiques agissant sur des qubits de calcul et un ensemble initialisé de qubits auxiliaires (42), dans laquelle, dans la mise en œuvre, le circuit quantique (28, 28a-p) est appliqué plusieurs fois dans une séquence concaténée de circuits quantiques (28, 28a-p) à un état quantique d'entrée.

**11.** Système (10) selon la revendication 10, dans lequel le système (10) est en outre configuré pour communiquer la mise en œuvre à un système de calcul quantique pour exécuter la mise en œuvre sur du matériel quantique.

**12.** Système de calcul hybride quantique-classique comprenant un système (10) selon la revendication 10 ou 11 et du matériel de calcul quantique, ledit système de calcul hybride quantique-classique étant configuré pour

recevoir la mise en œuvre du système de traitement (20),
mettre en œuvre la mise en œuvre dans le matériel de calcul quantique, et
recevoir un résultat de calcul du matériel de calcul quantique.

**13.** Support non transitoire comprenant des instructions lisibles par machine qui, lorsqu'elles sont exécutées par un système de traitement (20), mettent en œuvre un procédé selon l'une quelconque des revendications 1 à 9 et/ou un système selon l'une quelconque des revendications 10 à 12.

10
12
14
16
18
|0>
|0>
|0>
20

Fig. 1

obtaining an approximated MPO representation of the function
S10
selecting an approximation rank based on the MPO representation
S12
determining a rank-based orthogonal approximation of the approximated MPO representation in the form of an orthogonal MPO with isometric sub-tensors of the approximation rank
S14
encoding the orthogonal approximation into a quantum circuit based on encodings of the isometric sub-tensors into quantum gates
S16
encoding a higher power of the orthogonal approximation based on applying the quantum circuit multiple times in a concatenated sequence of quantum circuits to an input quantum state
S18

Fig. 2

24
24a
22
26
26
26
26
$M_{N\times N}$
N
N
2
r
log(N)

Fig. 3

22
26
$r$
30
32a
32
$R$
32
$j_{k-1}$
$m_k$
$l_k$
$j_k$
32b
34
36
$|0\rangle$
32
32
32
32
$|0\rangle$
38
28
42
40
$|0\rangle^{\otimes\lceil\log(r)\rceil}$
$U_1$
$U_2$
$U_{n-1}$
$U_n$
44

Fig. 4

Diagonal matrix $M_D$
Relative error
$10^{-2}$
$10^{-4}$
$10^{-6}$
$10^{-8}$
$10^{-10}$
$10^{-12}$
$10^{-14}$
$10^{-16}$
$n$= 5
$n$= 10
$n$= 30
$n$= 50
1
2
3
4
Success probability
0.5
0.4
0.3
0.2
0.1
0.0
$n$= 5
$n$= 10
$n$= 30
$n$= 50
1
2
3
4
Number of ancillas = $\log_2 R$


Fig. 5

Laplace
Relative error
$10^{0}$
$10^{-2}$
$10^{-4}$
$10^{-6}$
$10^{-8}$
$10^{-10}$
$10^{-12}$
$10^{-14}$
$10^{-16}$
n= 5
n= 10
n= 30
n= 50
1
2
3
4
Success probability
0.5
0.4
0.3
0.2
0.1
0.0
n= 5
n= 10
n= 30
n= 50
1
2
3
4
Number of ancillas = $log_2R$


Fig. 6

$10^1$
$10^0$
$10^{-1}$
Time, s
R = 2
R = 4
R = 16
R = 32
10
100
200
300
Number of qubits n


Fig. 7A

3.0
2.5
2.0
1.5
1.0
0.5
0.0
Time, s
Cost function derivatives
Constant c
Cost function
Riemannian part
10
100
200
300
Number of qubits n


Fig. 7B

$f(x)$
$f_0$
$f_1$
$f_{2^n-1}$
$x_l$
$x_r$
$x$
Fig. 8A
$|f\rangle_{\mathrm{MPS}} =$
$r$
$n$
Fig. 8B
$\hat{H} =$
22
Fig. 8C
$\hat{U} = \arg\min_{\hat{\mathcal{U}}, c} ||c\hat{\mathcal{U}} - \hat{H}||$
28
18
12
46
30
48
$\hat{U}$
H
$|0\rangle$
$\hat{U} =$
$R$
Fig. 8F
Fig. 8E
Fig. 8D

|0⟩
H
$\hat{U}_{MPO}$
42
44
46
12
18
48
28a
28p
p
0000
0111
0100
...
$U_1$
$U_2$
$U_3$
$U_4$
40


Fig. 9A

Fig. 9B

MPO, $R = 4$
MPO, $R = 8$
$x_k$
$y_k$
0.80
0.72
0.64
0.56
0.48
0.40
0.32
0.24
0.9
0.8
0.7
0.6
0.5
0.4
0.3
0.2
0.35
0.30
0.25
0.20
0.15
0.10
0.05
0.00
0.0
0.1
−4
−2
0
2
4

Fig. 10A

Fig. 10B

Fig. 10C

Fig. 10D

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **SHENDE et al.** Minimal universal two-qubit controlled-not-based circuits. *Phys. Rev. A*, June 2004, vol. 69, 062321
- **LUBASCH et al.** *Variational quantum algorithms for nonlinear problems*
- **MELNIKOV et al.** *Quantum state preparation using tensor networks*
- **OSELEDETS et al.** *TT-cross approximation for multidimensional arrays*
- **JANCO et al.** *Unrolled algorithms for group synchronization*
- **SHENDE et al.** Minimal universal two-qubit controlled-not-based circuits.. *Phys. Rev. A*, 2004